(19) Europäisches Patentamt / European Patent Office / Office européen des brevets

(11) **EP 1 629 649 B1**

(12) **EUROPEAN PATENT SPECIFICATION**

(45) Date of publication and mention
of the grant of the patent:
**19.09.2007 Bulletin 2007/38**

(21) Application number: **03818930.4**

(22) Date of filing: **24.10.2003**

(51) Int Cl.:
*H04L 25/03* (2006.01)  *H04L 1/06* (2006.01)

(86) International application number:
**PCT/EP2003/011842**

(87) International publication number:
**WO 2005/043851 (12.05.2005 Gazette 2005/19)**

(54) **APPARATUS AND METHOD FOR PRECODING A MULTICARRIER SIGNAL**

VORRICHTUNG UND VERFAHREN ZUR VORKODIERUNG EINES MEHRTRÄGERSIGNALS

APPAREIL ET PROCEDE POUR LE PRECODAGE D'UN SIGNAL DE MULTIPORTEUSE

(84) Designated Contracting States:
**DE GB**

(43) Date of publication of application:
**01.03.2006 Bulletin 2006/09**

(73) Proprietor: **NTT DoCoMo, Inc.
Tokyo (JP)**

(72) Inventor: **KUSUME, Katsutoshi
80687 Munich (DE)**

(74) Representative: **Schoppe, Fritz et al
Schoppe, Zimmermann, Stöckeler & Zinkler
Patentanwälte
Postfach 246
82043 Pullach bei München (DE)**

(56) References cited:
**DE-A- 19 934 669**

• **ZHIYONG PU ET AL: "Transmission and
reception of TDD multicarrier CDMA signals in
mobile communications system" VEHICULAR
TECHNOLOGY CONFERENCE, 1999 IEEE 49TH
HOUSTON, TX, USA 16-20 MAY 1999,
PISCATAWAY, NJ, USA,IEEE, US, 16 May 1999
(1999-05-16), pages 2134-2138, XP010342238
ISBN: 0-7803-5565-2**

## Description

The present invention is in the field of telecommunications and, in particular, in the field of multicarrier transmission techniques.

Future wireless communication systems are expected to achieve high data rates associated with broadband signals to be transmitted. Multicarrier systems, such as orthogonal frequency division multiplexing (OFDM) or multicarrier code division multiplex access (MC-CDMA) are promising schemes for future mobile communications, as is described in "J. A. C. Bingham, "Multicarrier for Data Transmission: An Idea Whose Time Has Come", IEEE Communications Magazine, vol. 28, no. 5, pp. 5 - 14, May 1990, and in S. Abeta, H. Atarashi, and M. Sawahashi, "Forward link Capacity of Coherent DS-CDMA and MC-CDMA Broadband Packet Wireless Access in a Multi-cell Environment", in Proc. IEEE Vehicular Technology Conference (VTC'2000-Fall), Boston, USA, September 2000. The multicarrier systems handle the severe frequency selectivity resulting from the broadband signals by using Fourier transform and a cyclic prefix extension as a guard interval. However, once the maximum delay of a communication channel exceeds the guard interval, then severe performance degradation can be observed.

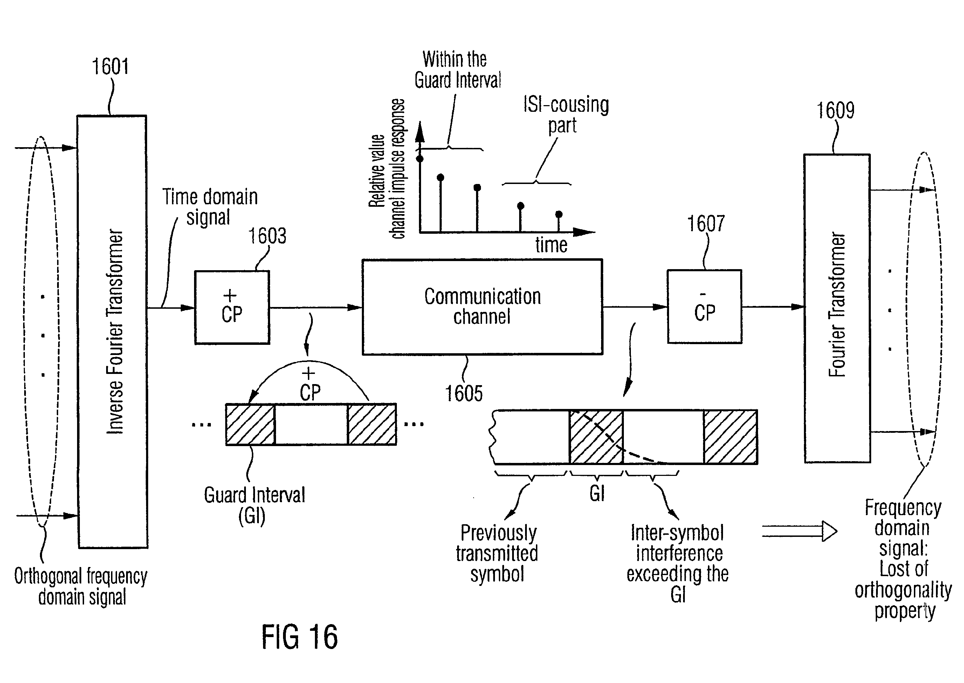

Fig. 16 demonstrates a conventional OFDM transmission scheme. At a transmitter, a frequency domain signal as a multicarrier signal is provided to an inverse Fourier transformer 1601. In the case of OFDM transmission, the frequency domain signal is orthogonal. The inverse Fourier transformer 1601 performs an inverse Fourier transform and provides a time domain signal. In order to protect the signal to be transmitted from intersymbol interferences (ISI), a guard interval is introduced by a block 1603. In particular, the guard interval is an exact copy of a number of last values to be transmitted, wherein the number of values, i.e. a length of the guard interval, corresponds to an assumed maximum channel length, i.e. maximum channel delay. Therefore, the guard interval is, in the case of the OFDM transmission, a cyclic extension of the signal to be transmitted and often referred to as cyclic prefix (CP). The (cyclic) transmit signal is then transmitted through the communication channel 1605 being characterized by a channel impulse response.

In order to describe a behavior of a digital communication system, the communication channel 1605 can be characterized in the digital domain by a discrete channel impulse response comprising discrete taps, wherein each tap corresponds to a propagation path associated with a path delay as a long-term channel state in the case of a multipath communication channel.

In Fig. 16, an example of a channel impulse response is depicted. The channel impulse response comprises a plurality of discrete taps, wherein, for example, the first three taps are associated a channel delay which is equal to or shorter than the guard interval. In other words, the intersymbol interferences caused by this part of the channel impulse response are completely covered by the guard interval. Contrary thereto, the last two channel impulse response coefficients represent the ISI causing part of the communication channel since the versions of the transmitted signal transmitted through propagation paths associated with the last two channel taps are significantly delayed and appear within the signal part which is not covered by the guard interval. Therefore, at an output of the communication channel 1605, the transmitted signal comprises intersymbol interferences depicted within a signal frame shown in Fig. 16. To be more specific, due to the channel impulse response of the communication channel, a certain amount of energy corresponding to a previously transmitted symbol appears within the guard interval of the currently considered symbol. Additionally, a further amount of energy associated with the previously transmitted symbol appears within a signal part following the guard interval. This further amount of energy cause intersymbol interferences, and, as a consequence, a loss of orthogonality of a received frequency domain signal.

In a receiver, the cyclic prefix is stripped by the block 1607 and a resulting receive signal is transformed into a frequency domain using the Fourier transformer 1609.

Since the received frequency domain signal is not orthogonal anymore, the transmitted information cannot properly be detected which results in an increased bit error rate.

Nevertheless, OFDM is an effective transmission scheme for high data rate communication systems. The OFDM introduces the redundancy (guard interval) which is taken as long as or longer than the maximum delay of the communication channel between the transmitter and the receiver. This enables simple signal processing at the receiver. However, using the guard interval leads to a loss in data rate because the guard interval is the redundancy which is discarded at the receiver in order to remove the intersymbol interferences. Furthermore, the system's performance degrades severely when the guard interval is not sufficiently long with respect to the maximum delay of the communication channel, or, in other words, when the maximum delay of the channel exceeds the guard interval. This problem occurs in several propagation scenarios, as for example in wireless communications or in wired communications.

In order to combat the performance degradation for a long channel delay exceeding the guard interval, several conventional approaches exist, where, in general, an additional signal processing at the receiver, for example an equalizer, is introduced. In H. Schmidt and K. D. Kammeyer, "Impulse truncation for wireless OFDM systems", in 5th International OFDM-Workshop, Hamburg, Germany, September 2000, a channel impulse truncation by a linear filter is proposed in order to shorten the channel impulse response. In N. Al-Dhahir and J. M. Cioffi, "Optimum Finite-Length Equalization for Multicarrier Transceivers", IEEE Transactions on Communications, vol. 44, no. 1, pp. 55 - 64, January 1996, an equalizer in the time domain at the receiver is proposed. In S. Trautmann, T. Karp, and N. J. Fliege, "Frequency Domain Equalization of DMT/OFDM Systems with Insufficient Guard Interval", in Proc. IEEE Int. Conference on Communications (ICC 2002), vol. 3, Apr/May 2002, pp. 1646 - 1650, an equalizer in frequency domain is disclosed. In Y. Sun, "Bandwidth-Efficient Wireless OFDM", IEEE Journal of Selected Areas in Communications, vol. 19, no. 11, pp. 2267 - 2278, November 2001, a nonlinear decision feedback equalizer is described. In Z. Whang and G. B. Giannakis, "Wireless Multicarrier Communications", IEEE Signal Processing Magazine, vol. 17, no. 3, pp. 29 - 48, May 2000, a linear equalizer for zero padding for OFDM systems is disclosed. M. Budsabathon, Y. Hara, and S. Hara, "On a Pre-FFT OFDM Adaptive Antenna Array for Delayed Signal Suppression", in Proc. the 7-th International OFDM-Workshop, Hamburg, Germany, September 2002 discloses a delay suppression by the means of beamforming.

The prior art approaches indicated above suffer from the disadvantage, that an additional signal processing scheme at the receiver is necessary which makes the receiver more complex. Moreover, the ISI cannot completely be removed, since the actually distorted signal is processed at the receiver.

A further disadvantage of the prior art schemes is, that, with an increasing length of a guard interval reflecting the assumed maximum channel length, the bandwidth efficiency is reduced. This problem can additionally be overcome by using more comprehensive error encoding schemes. However, with an increasing encoding complexity, the bandwidth efficiency decreases since redundancy has to be introduced, which is a common approach in known error correcting schemes.

An alternative approach disclosed in K. Kusume, "Linear Space-Time Precoding for OFDM Systems based on Channel State Information", Proceedings IEEE, International Symposium on Personal, Indoor, and Mobile Radio Communications (PIMRC 2003), Beijing, China, September 2003, vol. 1, pp. 231-235, applies a linear transmit precoding scheme based on perfect channel state information (CSI) for precoding the signal to be transmitted. CP extension of OFDM systems is replaced by the precoding filter, which spreads the signal in the time domain. However, the above approach assumes the perfect knowledge of the channel state information for a design of the digital processing at the transmitter. Therefore, it cannot be applied for frequency division duplex systems with high mobility introducing time-variance of the communication channel. To be more specific, with an increasing speed of a mobile terminal, the communication channel becomes more time-variant so that the channel impulse response and, in particular, the channel impulse response coefficients of the communication channel change very quickly within one transmitted symbol. Therefore, a perfect knowledge of the short-term channel state information comprising a perfect knowledge of current magnitudes of the channel impulse response coefficients and of current phases cannot be obtained. Therefore, the above-indicated prior art suffers from an increased bit error rate in mobile transmission scenarios.

It is the object of the present invention to provide an efficient scheme for precoding multicarrier signals in a multicarrier transmission scenario.

This object is achieved by the apparatus for precoding a multicarrier signal in accordance with claim 1 or by a multicarrier transmitter in accordance with claim 18 or by a method for providing a multicarrier signal in accordance with claim 19 or by a method for providing a precoded signal in accordance with claim 20 or by a computer program in accordance with claim 21.

The present invention is based on the finding, that intersymbol interferences can be avoided, when a multicarrier signal to be transmitted through a multipath communication channel is precoded by exploiting only long state channel information and by discarding the short state channel information. In particular, it has been found, that the multicarrier signal to be transmitted can efficiently be precoded, when only an information on the channel delays associated with the propagation paths of the multipath communication channel as long-term channel state information is explicitly taken into account. This is due to the further finding, that the long-term channel state information describes a characteristic of the multipath communication channel with respect to intersymbol interferences to be suppressed. Contrary thereto, the short-term channel state information basically describes a time-variation of the channel coefficients due to the velocity of, for example, the mobile terminal. As long as a length of a propagation path associated with a certain path delay can be assumed as being constant within a timeinterval determined by the symbols duration, then the strongly time-varying channel coefficients do not introduce any additional delay. Therefore, the present invention exploits only knowledge of the plurality of path delays, wherein each path delay is associated with a corresponding propagation path, instead of exploiting time-varying characteristics of the communication channel in the short-term sense.

Based on the channel delay characteristic comprising the path delays, the multicarrier signal can efficiently be precoded using an inverse path delay characteristic, so that at the receiver the channel influence with respect to the channel delay characteristic is reduced.

It is a further advantage of the present invention, that the inventive approach can be applied to transmitting information within any conventional transmission scenario. To be more specific, the inventive precoding scheme provides a modulation scheme, whereby a precoded multicarrier signal is provided from a multicarrier signal by applying the inventive precoding scheme, wherein the precoding scheme explicitly considers both: the characteristic of the communication channel with respect to the channel delays causing intersymbol interferences and with respect to a multicarrier demodulating scheme applied at a receiver for demodulation. For example, the inventive precoding scheme can be applied to modulating a multicarrier signal to obtain a precoded signal to be transmitted to an OFDM receiver. Since the channel delay characteristic is explicitly taken into account, a received signal contains the ISI energy within the guard interval which is removed when using an OFDM receiver.

Moreover, the inventive precoding scheme is flexible with respect to a system's design. For example, the inventive precoding scheme can be applied to a transmission of information in a multiple input single output (MISO) scenario (MISO channels). Additionally, the inventive precoding scheme can also be applied for single input single output (SISO) channels. MISO scenario means, that multiple antenna elements at the transmitter and single antenna at the receiver are used, so that a MISO channel is formed. The SISO scenario is formed, when a single antenna at the transmitter and at the receiver, is used.

Unlike the prior art equalizer approaches indicated above, the signal processing at the receiver remains unchanged when applying the inventive precoding scheme. For example, a simple OFDM demodulation can be performed at a mobile terminal since the inventive processing scheme resides, for example, in a base station for the downlink. Unlike the previously-mentioned prior art, the inventive scheme requires only long-term channel state information instead of instantaneous channel state information.

As mentioned above, the short-term channel state information is referred to fading coefficients which may vary very fastly depending on the mobility. Contrary thereto, the long-term channel state information characterizes a number of multipath, delays, and directions of departure which are determined by geometrical characteristics. These characteristics change rather slowly with respect to the mobility of the mobile terminals. As mentioned above, it is not always possible, or feasible, to assume, that the instantaneous CSI is known at the transmitter.

Additionally, the inventive approach is stable, since the required long-term channel state information may be assumed as being non-time-variant within one transmitted symbol. Therefore, the inventive precoding scheme may be applied to reducing ISI even in transmission scenarios being characterized by high mobility.

In accordance with the present invention, the precoding scheme can be understood as a precoding filter having filter coefficients. These filter coefficients can be derived by starting from the known minimum mean squared error (MMSE) criterion. Therefore, an optimum solution in the MMSE sense can be obtained.

A further advantage of the present invention is, that the inventive precoding scheme only introduces additional complexity at the transmitter (base station). To be more specific, the inventive precoding scheme does not introduce any complexity at the receiver (mobile terminal). This advantage reflects the need for compact terminals having low power consumption in order to obtain battery-driven small power terminals. Since the additional signal processing is transferred to the base station, the increased space requirement and the increased power consumption are acceptable, since the same are not a crucial issue while designing a base station. Therefore, the inventive precoding scheme is cost-effective, since a performance of the transmission system is improved, while a number of mobile terminals can be kept simple and compact due to low power consumption. Hence, the inventive precoding scheme provides mobile terminals being characterized by an increased system's performance at the same cost, so that the effectively cheaper mobile terminals are more attractive to customers as well.

Moreover, the inventive precoding scheme is adaptive for a variety of propagation scenarios, wherein conventional mobile terminals can be used. For example, OFDM transmission technique can be used in wireless local area networks (LAN) often used in indoor environment where a maximum delay of the communication channel is limited due to the limited propagation space. However, when the OFDM system is used for transmission within a cellular system in outdoor environments, there exist many propagation scenarios with different delays. Since the inventive precoding scheme keeps the performance reasonable in case of long delays exceeding the guard intervals, a system adaptation in a plurality of scenarios can be performed.

Moreover, the inventive precoding scheme is adaptive for a propagation environment in terms of channel noise, since the inventive preceding scheme can be optimized by taking a channel noise power in a current transmission environment explicitly into account. Therefore, a system optimization with respect to the channel noise can be achieved when using the inventive precoding scheme.

A further advantage of the present invention is, that the inventive precoding scheme is aware of quality of service requirement for the communication link, since an optimization of the inventive approach can be dependent on a plurality of parameters for example a transmit power. The transmit power can be chosen in accordance with the quality of service requirement, for example a higher transmit power for a user requiring higher transmission quality. Therefore, the signals to be transmitted can be adapted, or optimized, with respect to the available transmit power.

It is a further advantage of the present invention, that the inventive precoding scheme enables higher data rates of a resulting transmission system when compared to the standard OFDM transmission systems. For example, in some transmission scenarios, longer delays of the communication channel require longer guard intervals introducing more redundancy, as described above. This limits the transmission data rate. In accordance with the present invention, even shorter guard intervals can be used, so that higher data rates can be achieved. In other words, the present invention allows an efficient exploitation of the available communication resources such as the available communication bandwidth.

It is a further advantage of the present invention, that the same air interface can be used in different scenarios or even in different cells. For example, if a mobile station moves from inside (indoor) to outside (outdoor) or vice versa, then the resolvable path delays of the channel change. In such cases, a handover shall occur in order to take the movement of the mobile station into account. Since the inventive precoding scheme uses the same air interface, an effort to realize a seamless handover can be easified.

It is a further advantage of the present invention, that the inventive precoding approach enables a flexible cell design for cellular systems. Since the cell design takes into account a maximum delay of a communication channel associated with the cell size, the cell design is strictly related to the maximum delay. This tight relation between the delay and the cell design can be loosened when using the inventive precoding scheme, since a reasonable performance can be kept if long delays of the channel (resulting from the bigger cell) exceed the guard interval used at the OFDM receiver. For instance, in a case of the previously-mentioned air interface, the size (the length) of the guard interval, which is designed for urban areas, can be shortened. In this case, the cell size corresponds to a microcell which leads to a reduction of a number of base stations necessary in a certain area. Furthermore, it is even possible to place less base stations in a rural area being characterized by a bigger cell size without compromising the quality or the data rate of the communication link.

It is a further advantage of the present invention, that the inventive precoding scheme requires less frequent update of filter coefficients. The long-term CSI is observed in the long-term sense and does not change so frequently as, for example, the channel impulse responses. Therefore, the inventive precoding filter can be updated/recalculated less frequently than any other precoding scheme based on perfect channel state information.

Further embodiments of the present invention are described in detail with respect to the following Figures, in which:

Fig. 1      shows a block diagram of an apparatus for providing a multicarrier signal in accordance with a first embodiment of the present invention;

Fig. 2      demonstrates a decomposition of a channel impulse response with respect to the path delays;

Fig. 3      shows a linear model of an OFDM system;

Fig. 4      shows parallel channels in the case of OFDM transmission;

Fig. 5      demonstrates a beamforming approach;

Fig. 6      demonstrates a performance of beamforming at a transmitter;

Fig. 7      demonstrates parallel channels in absence of noise;

Fig. 8      demonstrates a separation of short-term CSI and long-term CSI in the case of SISO channels;

Fig. 9      shows a block diagram of a system model in accordance with the present invention;

Fig. 10      shows a block diagram of a communication system in accordance with the present invention;

Fig. 11      demonstrates conditions for orthogonality in long-term sense;

Fig. 12      shows a block diagram of a communication system in accordance with the present invention;

Fig. 13      shows a block diagram of a communication system in accordance with the present invention;

Fig. 14      demonstrates a difference between the conventional approach and the inventive approach with respect to a structure of transmitted signals;

Fig. 15      demonstrates a performance of the inventive approach; and

Fig. 16      shows a conventional OFDM scheme.

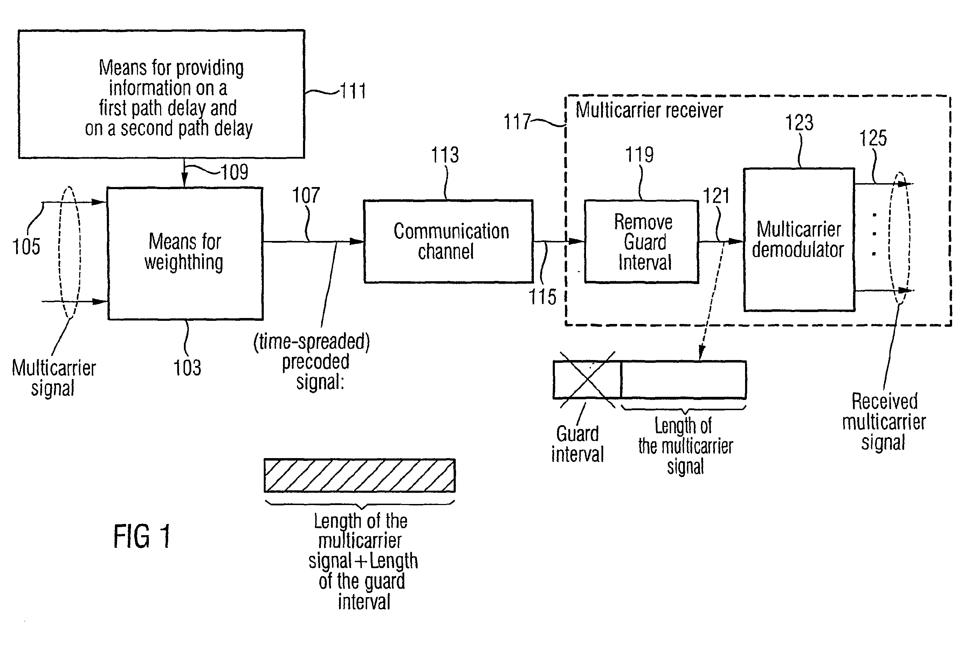

Fig. 1 shows an apparatus for precoding a multicarrier signal in accordance with a first embodiment of the present invention.

In accordance with the present invention, the apparatus for precoding the multicarrier signal is operative for providing a precoded signal from a multicarrier signal. The multicarrier signal comprises a set of values, wherein each value of the set of values is associated with a carrier frequency of a number of carrier frequencies of a multicarrier modulation scheme associated with the considered transmission scenario.

The apparatus shown in Fig. 1 comprises means 103 for weighting the multicarrier signal, the means 103 for weighting having a number of inputs 105 and an output 107. Additionally, the means 103 for weighting comprises a further input 109, to which a means 111 for providing information on a first path delay and on a second path delay is coupled.

The output 107 of the means 103 for weighting is coupled to a communication channel 113 since, in Fig. 1, a principle model of a communication system is demonstrated. The communication channel 113 has an output 115 coupled to a multicarrier receiver 117, which can be, for example, an OFDM receiver. The multicarrier receiver 117 has a block 119 being operative for removing a guard interval, the block 119 having an output 121 coupled to a multicarrier demodulator 123. The multicarrier demodulator has a number of outputs 125 for providing a received version of the multicarrier signal to be transmitted.

As mentioned above, Fig. 1 shows a principle diagram of a communication system, in which the inventive apparatus for precoding the multicarrier signal is embedded. The communication channel 113 consists, for example, of a transmit filter, of an digital/analog converter, of an amplifier, of one or more transmit antennas and so forth. The communication channel 113 is assumed to be a multipath communication channel. Therefore, the communication channel 113 is characterized by a plurality of propagation paths, wherein each path is associated with a path delay. To be more specific, the communication channel 113 comprises a first propagation path associated with a first path delay and a second propagation path associated with a second path delay. A precoded signal provided by the means 103 for weighting from the multicarrier signal is, therefore, to be transmitted through the multipath communication channel 113 via the plurality of propagation paths, and, in particular, via the first communication path and the second communication path of the communication channel 113.

At the receiver, the communication channel 113 comprises a receive antenna, a receive filter, an analog/digital converter and so forth. A signal receivable by the multicarrier receiver is provided via the output 115 of the communication channel 113 to the block 119 being operative for removing the guard interval. Subsequently, the block 119 provides a time domain signal to the conventional multicarrier demodulator 123 which can be a Fourier transformer being operative for transforming the time domain signal provided via the output 121 into frequency domain to obtain a received multicarrier signal.

As mentioned above the multicarrier receiver 117 may be a conventional OFDM receiver. Therefore, the block 119 removes the guard interval having a length associated with a maximum channel length, as is depicted in Fig. 1. The remaining signal (time domain signal) having a length corresponding to a length of the multicarrier signal is then provided via the output 121 to the multicarrier demodulator 123. If a maximum delay of the communication channel is shorter than or equal to the guard interval, then the received multicarrier signal is orthogonal, since no ISI is introduced. However, if the maximum channel delay exceeds the length of the guard interval, then ISI are introduced, so that the received multicarrier signal is not orthogonal anymore, which leads, as mentioned above, to an increased bit error ratio. In this case, the first path delay associated with the first propagation path of the communication channel is larger than the length of the predetermined guard interval to be removed in the multicarrier receiver 117 for further processing. To be more specific, at least one path delay exceeds a duration of the predetermined guard interval.

In order to reduce the intersymbol interferences, the inventive means 103 for weighting is operative for weighting the multicarrier signal provided via the input 105 using the information on the first path delay and the information on the second path delay provided by the means 111 for providing the information. More specifically, the means 103 for weighting is operative for weighting the multicarrier signal such that a time-spread precoded signal is obtained, wherein time spreading is necessary in order to protect the precoded signal to be transmitted from intersymbol interferences. However, the inventive means 103 for weighting is operative for time-spreading such that a length of the time-spread precoded signal corresponds to a sum of a length of the multicarrier signal and the length of the predetermined guard interval, as is depicted in Fig. 1. The time-spread precoded signal is provided via the output 107 to the communication channel 113 as the precoded signal for transmission.

Usually, the multicarrier signal provided via the input 105 is a digital signal comprising a set of multicarrier values being associated with the carrier frequencies applied to the transmission of information. In this case, the means 103 for weighting may be operative for weighting the set of multicarrier values using a set of weighting coefficients, such that, at the receiver, the intersymbol interferences are reduced. Preferably, the means 103 for weighting performs a filter operation, wherein the multicarrier signal provided via the input 105 is filtered using the set of weighting coefficients. The means 103 for weighting may, therefore, comprise a multiplier for multiplying each multicarrier value by a weighting coefficient. Furthermore, the means 103 for weighting may comprise an adder for adding a result of the multiplications in order to provide the precoded signal as a result of a convolution operation associated with the filtering.

As mentioned above, the inventive approach relies only on exploitation of a knowledge of the distinct propagation path delays (path delays) associated with the multipath propagation characteristic of the communication channel 113.

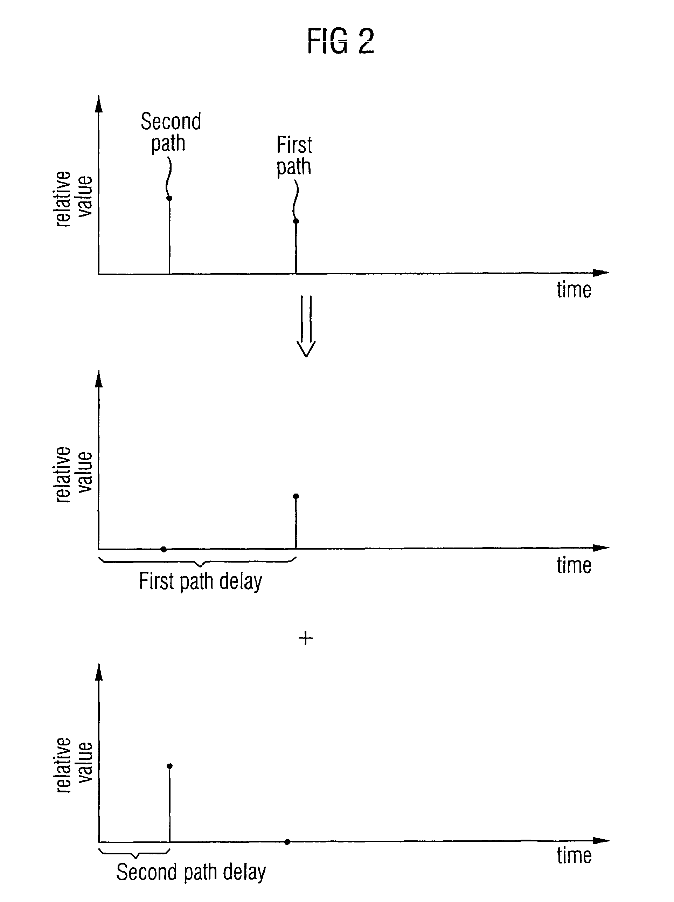

Fig. 2 shows, by the way of example only, an embodiment of a propagation characteristic of the communication channel 113 due to the multipath transmission (multipath delay characteristic). As is depicted in Fig. 2, the communication channel 113 may be represented by a channel impulse response comprising two channel taps, as is depicted in the upper diagram of Fig 2. Each channel tap is associated with a tap value, which may be complex, representing the current attenuation of the corresponding path and its influence on a phase of a received signal.

For the sake of descriptional simplicity, Fig. 2 shows only two channel taps, corresponding to the first path and to the second path. As mentioned above, the amplitude and phase information is irrelevant for the inventive precoding approach. To be more specific, only the information on the first path delay, depicted in the middle diagram of Fig. 2, and on the second path delay, depicted in the lowest diagram of Fig. 2, is of interest. In other words, the only information on the communication channel which is required for performing the inventive precoding operation is the information on the first path delay and on the second path delay, regardless an amplitude or phase variation of the corresponding channel taps associated with the first propagation path and the second propagation path. In order to emphasize this requirement, Fig. 2 shows a decomposition of the channel impulse response with respect to the multipath delay characteristic.

A version of the precoded signal transmitted via the first path experiences the first path delay, wherein a version of the precoded signal transmitted via the second path experiences the second path delay. At a receiver, a superposition of received versions corresponding to transmitted versions of the precoded signal is received, wherein, due to the multipath delay characteristic of the communication channel, intersymbol interferences occur.

In order to reduce the intersymbol interferences at the receiver, the set of weighting coefficients used by the means 103 comprises the multipath delay characteristic of the communication channel 113. More specifically, the set of weighting coefficients may directly comprise the first path delay and the second path delay or suitable information thereon. For example, the set of weighting coefficients may comprise the first path delay and the second path delay as normalized value with respect to, for example, the first path delay, so that unitless values are obtained. Using the set of weighting coefficients, the precoded signal is to be time-spread such, that the intersymbol interferences are cumulated within the guard intervals to be removed by the multicarrier receiver 117 regardless of the maximum channel delay. In order to concentrate an energy of the intersymbol interferences within the guard interval, the set of weighting coefficients used by the means 103 for weighting may further comprise an information on the length of the predetermined guard interval, or, alternatively, directly the length of the predetermined guard interval. Also in this case, the length of the predetermined guard interval comprised by the weighting coefficients can be normalized to a suitable value, so that unitless coefficients are used.

Furthermore, the weighting coefficients comprised by the means 103 for weighting may further comprise Fourier coefficients associated with a Fourier transform and/or Fourier coefficients associated with an inverse Fourier transform in order to take the currently used multicarrier modulation scheme into account. Preferably, the precoded signal is to be transmitted to the multicarrier receiver 117, which is an OFDM receiver. In this case, the multicarrier signal provided via the input 105 to the means 103 for weighting is to be transformed into time domain, so that the precoded signal provided via the output 107 of the means 103 for weighting may be considered as being a time domain signal to be transmitted to the OFDM multicarrier receiver 117. In other words, the means 103 for weighting performs a precoding and a modulation operation. To be more specific, the means 103 for weighting replaces in this case an OFDM modulator. Simultaneously, the multicarrier signal provided via the inputs 105 is transformed into the precoded signal by taking an optimum transmission strategy with respect to ISI reduction and the applied multicarrier modulation/demodulation scheme into consideration.

Simultaneously, even the channel noise can explicitly be taken into account, so that the precoded signal is more robust with respect to the channel noise. To do so, the set of weighting coefficients used by the means 103 for weighting may comprise an information on the channel noise, or, in particular, on the channel noise power. In order to take the channel noise power into account, the means 111 for providing the information may be further operative for providing an information on the channel noise power, so that same can explicitly be taken into account within the set of weighting coefficients. However, the channel noise affects the received signal at the output of the communication channel. In order to provide the information on the channel noise to the means 103 for weighting, the information on the channel noise may be extracted from the received signal by the multicarrier receiver, which is a common technique. Then, the multicarrier receiver 117 may transmit the information on the channel noise to the means 111 for providing the information. The information on the channel noise can be, for example, transmitted via an unused section of a signal frame associated with a transmission standard, for example the HiperLAN standard.

If the precoded signal is to be transmitted to the multicarrier receiver 117 via a downlink frequency band differing from the uplink frequency band used by the multicarrier receiver 117 for communicating with the transmitter, then the information on the first path delay and on the second path delay required by the means 103 for weighting can only be extracted at the receiver. However, this task is not associated with an increased receiver's complexity, since traditional multicarrier receivers always apply a channel estimation scheme in order to, for example, adapt the equalization scheme to the current channel condition. This information can be transmitted to the means 111 for providing the information via an unused signal segment, as described above. The means 111 for providing the information is then operative for receiving the information on the first path delay and on the second path delay from the multicarrier receiver. For example, the multicarrier receiver 117 transmits the whole channel impulse response to the means 111 for providing the information. In this case, the means 111 for providing the information is operative for extracting the information on the first path delay and on the second path delay from the received information on the communication channel.

However, it would be of interest, that the means 111 for providing the information directly receives the information on the first path delay and on the second path delay. In order to enable such a communication, the present invention further provides a multicarrier receiver having such a functionality. This issue will be discussed later.

Alternatively, the inventive means 111 for providing may comprise a storage element for storing a plurality of channel delay profiles, wherein each channel delay profile is associated with a certain transmission scenario. Depending on the certain transmission scenario, for example urban area or rural area, the means for providing the information is operative for selecting a current channel delay profile corresponding to the current transmission scenario and to provide the corresponding information on the first path delay and on the second path delay, which information is comprised by the current channel delay profile, to the means 103 for weighting.

However, it is also possible, that the transmitter and the receiver transmit information within the same transmission frequency band. In this case, the means 111 for providing the information is operative for estimating the first path delay and the second path delay from a signal transmitted by the multicarrier receiver 117 within, for example, initial session. In order to estimate the first path delay and the second path delay, the means 111 for providing the information can be operative for determining an autocorrelation function of the received signal, since the autocorrelation function directly provides an information on the channel delay characteristic.

The information on the first path delay and on the second path delay may be required by the means 103 for weighting, when the same is operative for determining the weighting coefficients to be used for weighting the multicarrier signal in order to provide the precoded signal. In this case, the inventive means 103 for weighting may comprise means for determining the weighting coefficients. For example, the means for determining the weighting coefficients is operative for receiving the information on the first path delay and on the second path delay from the means 111 for providing the information and, by explicitly taking the information on the first path delay and on the second path delay into consideration, to determine the weighting coefficients. This aspect of the present invention will be discussed later.

In the following, the inventive approach will be described in more detail.

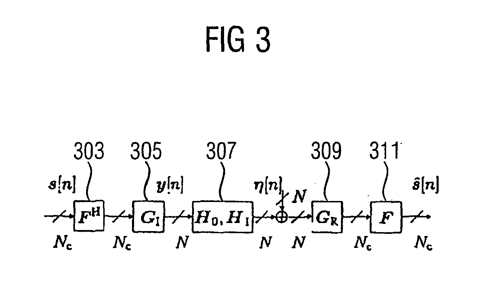

In Fig. 3, a structure of an OFDM transmission system is summarized. The OFDM transmission system comprises an inverse Fourier transformer 303 for transforming the multicarrier signal comprising $N_c$ values into time domain. Subsequently, the block 305 introduces a guard interval. The resulting signal is transmitted through a communication channel 307, wherein at an output of the communication channel 307 channel noise is added. At a receiver, a block 309 removes the guard interval and the so processed signal is provided to a Fourier transformer 311 for providing a received version of the multicarrier signal. It is to be noted, that the transmitted signal after guard interval insertion has a length of N. For simplicity, Fig. 3 does not explicitly show channel coding/decoding and interleaving/deinterleaving.

After channel coding and interleaving, the information bits are modulated to a complex value baseband symbols which are arranged in the vector

$$s[n] = \left[ s_1[n], \ldots, s_{N_c}[n] \right]^T \in C^{N_c},$$

of the n-th OFDM symbol, where $N_c$ and $(\bullet)^T$ are the number of subcarriers and the transpose of a matrix, respectively. The modulated signals are transformed from the frequency domain to the time domain by the inverse Fourier transform matrix $F^H$ where $(\bullet)^H$ is the Hermitian transpose of a matrix. The $N_c$-point Fourier transform matrix F is defined as

$$\left[ F \right]_{l,m} = \frac{1}{\sqrt{N_c}} w^{(l-1)(m-1)} \quad \text{and} \quad w = e^{-j2\pi / N_c},$$

where $[A]_{l,m}$ is the $(l, m)$-th entry of a matrix A and $1 \le l, m \le N_c$. Since the matrix F is unitary, the inverse Fourier transform is given by $F^H = F^{-1}$. Before the signal is transmitted, a time domain signal is cyclically extended by a cyclic prefix (CP) of size $N_g$ as the guard interval (GI). This is expressed by the GI insertion matrix as follows

$$G_I = \left[ B^T \ 1_{N_c} \right]^T \in R^{N \times N_c},$$

where $1N_c$ and B are an identity matrix of size $N_c$ and the last $N_g$ rows of $1_{N_c}$, respectively. For the sake of convenience is also defined

$$N = N_c + N_g.$$

Two channel models are considered in the following: single input single output channel (SISO) and multiple input single output channel (MISO). The SISO channel can be regarded as a special case of a MISO channel. In the following, the nilpotent shift matrix is defined

$$\Gamma_N = \begin{bmatrix} 0_{1\times(N-1)} & 0 \\ 1_{N-1} & 0_{(N-1)\times 1} \end{bmatrix} \text{ and } \Gamma_N^0 = 1_N.$$

Then, the channel convolution matrix of block Toeplitz structure of the OFDM symbol at time n can be expressed as

$$H_0 = \sum_{l=0}^{L} h_l \Gamma_N^l \otimes a_l^T \in C^{N\times NM},$$

where '$\otimes$' and $a_l \in C^M$ denote the Kronecker product and the array steering vector, respectively. M is the number of antenna elements at the transmitter. The order L channel taps, $h_l$, $l = 0, \ldots, L$, are assumed to be uncorrelated complex Gaussian random variables. Hence, the channel matrix for the OFDM symbol at time n-1 can be expressed as

$$H_1 = \sum_{l=1}^{L} h_l \Gamma_N^{N-1,T} \otimes a_l^T \in C^{N\times NM}.$$

The above channel matrix introduces intersymbol interference (ISI) from the symbol $s[n - 1]$ to $s[n]$. In the following, it is assumed, that a symbol duration is long so that only the previously sent symbol causes the ISI to the current symbol. Hence, the above channel matrices reduce to simple convolution matrices for SISO channels because $a_l = 1$, $\forall l$, for M = 1.

At the receiver, CP is removed from the received signal by the GI removal matrix.

$$G_R = \begin{bmatrix} 0_{N_c\times N_g} 1_{N_c} \end{bmatrix} \in R^{N_c\times N},$$

and the signal is transformed from the time domain to the frequency domain by F to recover the subcarrier signals.

The estimated signals can be expressed as

$$\hat{s}[n] = FG_R H_0 G_I F^H s[n] + FG_R H_1 G_I F^H s[n - 1] + \tilde{\eta}[n],$$

wherein the noise $\tilde{\eta}[n]$ in the frequency, domain is defined as

$$\tilde{\eta}[n] = FG_R \eta[n] \in C^{N_c},$$

and $\eta[n] \in C^N$ is a noise factor in the time domain.

A basic property of OFDM systems is, that, in frequency domain, the communication channel is transformed into a number of parallel channels, when the CP is set to be larger than the maximum delay of the communication channel in order to avoid ISI. A condition for reducing ISI is

$$G_R H_1 = 0 \text{ for } N_g \geq L,$$

therefore,

$$\hat{s}[n] = F G_R H_0 G_I F^H s[n] + \tilde{\eta}[n].$$

Since, when the CP is larger than the maximum delay of the channel, the channel convolution matrix $H_0$ becomes circulant and is diagonalized by the Fourier transform. By defining

$$H_c = G_R H_0 G_I$$

follows

$$F H_c F^H = \sqrt{N_c} \, diag(Fh) = \text{diag}\left(\lambda_1, ..., \lambda_{N_c}\right) = \Lambda$$

where h is the first column of $H_0$. Therefore, the above expression can be simplified to

$$\hat{s}[n] = \Lambda s[n] + \tilde{\eta}[n].$$

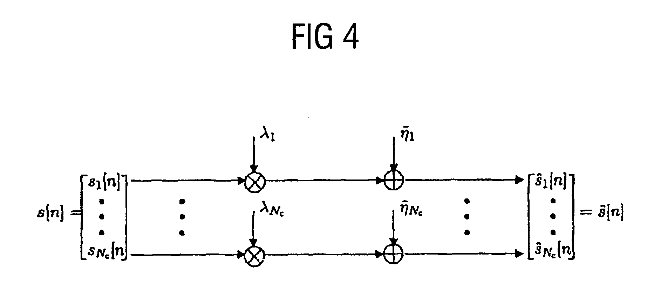

There is no intercarrier interference (ICI) and thus, a subcarrier can be easily recovered independently of each other. The parallel channels of independent subcarriers are illustrated in Fig. 4. In particular, Fig. 4 shows parallel channels equivalent, when CP is larger than the maximum delay of the communication channel.

In the following it will be explained, how OFDM systems gain diversity in frequency domain from a multipath SISO channel, by the way of example. In the following, the downshift operator is defined

$$S = \begin{bmatrix} e_2 & e_3 & \cdots & e_{N_c} & e_1 \end{bmatrix} \in R^{N_c \times N_c},$$

where $e_k$, $k = \{1, ... , N_c\}$ is the k-th column of the $N_c$ by $N_c$ identity matrix. If $N_g \geq L$ is satisfied, then it can be shown that the following relation holds:

$$G_R \Gamma_N^l G_I = S^l.$$

And from

$$FSF^H = \Omega = \mathrm{diag}\left( 1 \quad w \quad w^2 \cdots w^{N_c-1} \right)$$

follows

$$\left( FSF^H \right)^l = FS^l F^H = \Omega^l = \mathrm{diag}\left( 1 \quad w^l \quad w^{2l} \cdots w^{l(N_c-1)} \right),$$

whose diagonal elements are the ($l$ + 1) mod $N_c$ th-column of Fourier transform matrix as shown in the above equation multiplied by the normalization factor $\sqrt{N_c}$ . Thus, the diagonal matrix $\Lambda$ can be written as

$$\Lambda = FH_c F^H = FG_R H_0 G_I F^H = FG\sum_{l=0}^{L} h_l \Gamma_N^l G_I F^H$$

$$= \sum_{l=0}^{L} h_l FG_R \Gamma_N^l G_I F^H$$

$$= \sum_{l=0}^{L} h_l \Omega^l$$

where the above equations are applied for the last step. The above result shows that the diagonal matrix $\Lambda$ is a superposition of diagonal matrices $h_l\Omega^l$, ($0 \le l \le L$). Since the diagonal elements of $\Lambda$ represent frequency responses of the communication channel, the larger the number of paths L, the more diversity in frequency domain is obtained that lead to more reliable communication if channel coding schemes are applied in frequency direction. For instance, if there is no delay (L = 0), then the channel frequency responses are represented by $\Lambda = h_0\Omega^0 = h_0 1$ which means that the channel is flat over all subcarriers and no diversity is available.

According to a further aspect of the present invention, the weighting matrix as shown in Fig. 1 may be operative for beamforming.

Beamforming is a conventional approach exploiting multiple antennas for transmitting transmission beams powered in different directions. In M. Budsabathon, Y. Hara, and S. Hara, "On a Pre-FFT OFDM Adaptive Antenna Array for Delayed Signal Suppression", in Proc. the 7-th International OFDM-Workshop, Hamburg, Germany, September 2002 a beamforming at the receiver is described, wherein a problem caused by long channel delays exceeding the guard interval of the OFDM systems is solved. The prior art approach suppresses the signals impinging from the directions with the delays exceeding the guard interval to avoid the ISI and ICI. This scheme assumes multiple antennas deployed at the receiver, which requires certain space to mount multiple antennas and additional computation power. Therefore, the above-indicated prior art approach is not suitable for compact mobile terminals with low battery consumption.

Usually, in order to perform beamforming, at the signal to be transmitted is weighted by a beamforming vector (steering vector) in order to take the transmission direction into account. It has been further found, that the beamforming vector could be formed so that the transmitted signal does not propagate to the directions with delays exceeding the guard interval. This would reduce the effective number of path delays observed at the receiver and mitigate the ISI and ICI. However, it might be a disadvantage for channel coding schemes because the multipath is a diversity source as discussed above while the beamforming reduces the effective number of path delays at the receiver.

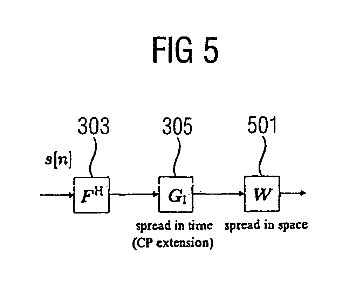

Fig. 5 shows a block diagram of a beamforming approach. The multicarrier signal is first transformed via the inverse Fourier transformer 303 into time domain. Then, the block 305 inserts a guard interval, which is equivalent to signal spreading in time domain (CP extension). The resulting time domain signal is then spread in spatial domain by a beamformer 501, which is often referred to as spreading in space.

The matrix W performs the beamforming which spreads the signal in the spatial domain. A look direction beamforming is considered in order to calculate a beamforming vector. Therefore, the matrix W is

$$W \; = \; 1_N \; \otimes \; \sum_{l=0}^{N_b} a_l^{\;*}$$

where $N_b$ is the number of beams to calculate the weighting vector.

In order to verify a system's performance associated to the beamforming approach, computer simulations have been performed.

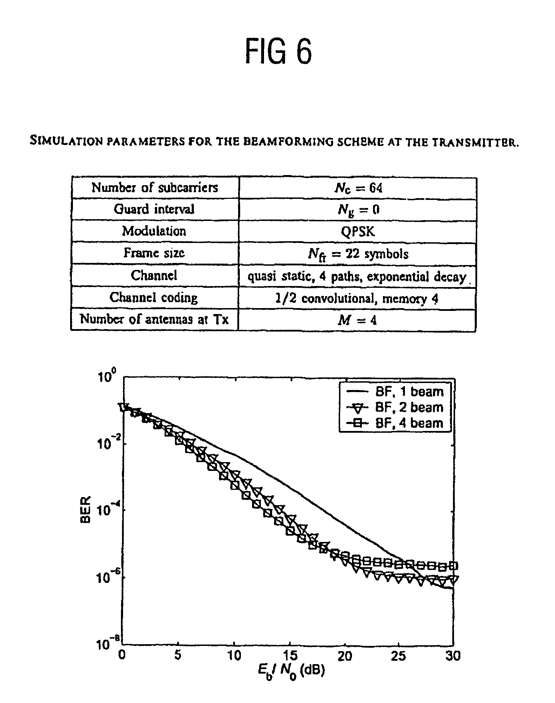

Fig. 6 demonstrates the resulting system performance in terms of bit error rate (BER) versus bit energy to noise ratio ($E_b/N_0$) for the case of one beam, two beams and four beams. The simulation parameters for the beamforming scheme at the transmitter are summarized in the above-depicted table. The guard interval size is set to zero as an extreme case of the insufficient guard interval. Thus, all channel delays exceed the guard interval. The directions of departure (DODS) for the beamforming vectors are chosen according to the corresponding path delay, wherein the DODS with the shortest path delays are chosen. The results show the increased performance for the fewer number of beams in the high signal to noise ratio region (SNR) because the ISI and ICI are suppressed. However, in the case of lower SNR, using the more number of beams is advantageous since the more frequency diversity is available that improves the performance due to channel coding. As can be seen in Fig. 6, there is a trade off between the frequency diversity gain and the interference mitigation with respect to the number of path delays. In order to improve the performance associated with the conventional beamforming scheme, the present invention further provides a concept for efficient beamforming, wherein the means for weighting is further operative for beamforming, since the steering vectors (beamforming vectors) can explicitly be taken into account while designed the set of weighting coefficients.

In the following, a difference between short-term channel state information and long-term channel state information will be explained.

Linear transmit processing schemes assuming that the transmitter have full knowledge of the communication channel are disclosed in K. Kusume, "Linear Space-Time Precoding for OFDM Systems based on Channel State Information", Proceedings IEEE, International Symposium on Personal, Indoor, and Mobile Radio Communications (PIMRC 2003), Beijing, China, September 2003, vol. 1, pp. 231-235, according to the approach disclosed in the above-indicated prior art document, the CSI is assumed to be fed back from the receiver or to be estimated from the alternative link of the time division duplex system. However, the assumption of the full channel knowledge may not be feasible for some systems. For instance, in frequency division duplex systems, the CSI, which is estimated from the uplink, cannot be applied for the downlink because the uplink and downlink reside in different carrier frequencies.

In order to design a new signal processing technique at the transmitter exploiting some CSI which do not change too fast such as path delays and DODS. That is because this geometrical information is considered to change rather slowly with respect to the mobile's movement.

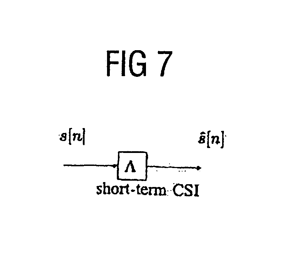

In the following, a separation of short- and long-term CSI will be discussed with respect to the SISO channel, wherein special properties of MISO channel models will be discussed later. As previously discussed, the OFDM modulation decomposes the multipath channel into parallel channels. In the absence of noise, the channel between the transmitter and the receiver, in the case of sufficiently chosen guard interval, can be described as is depicted in Fig. 7. The diagonal matrix A contains the channel frequency responses of all subcarriers in its main diagonal. These entries change very quickly and cannot be exploited at the transmitter. However, this diagonal matrix is a superposition of diagonal matrices, each of which corresponds to a distinct path delay.

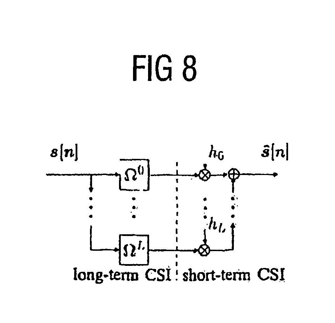

Fig. 8 demonstrates a separation of short-term CSI and long-term CSI on SISO channels, wherein a frequency domain representation is chosen. The communication channel comprises L+1 propagation paths associated with complex valued channel taps $h_l$ for the path $l$, $(0 \le l \le L)$. The complex valued channel taps vary fast and are considered as short-term CSI, while the diagonal matrix $\Omega^l$ corresponds to the path delay which does not change as fastly as the channel coefficients. Therefore, the diagonal matrix represents the long-term channel state information. The long-term CSI is assumed to be exploited at the inventive transmitter in order to design the signal processing.

For the sake of completeness, it is of interest to investigate the conditions for orthogonality in long-term sense. In the following, these conditions will be discussed in order to formulate the optimization problem associated with a design of the inventive weighting coefficients, which will be discussed later.

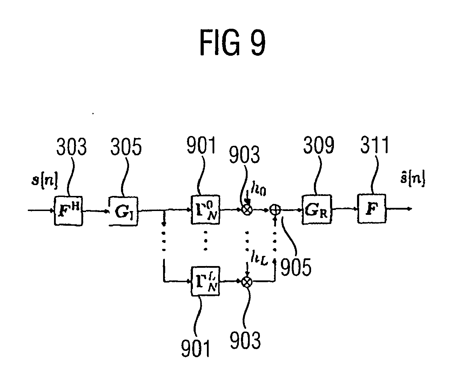

Fig. 9 shows a block diagram of a system model associated with a SISO communication channel.

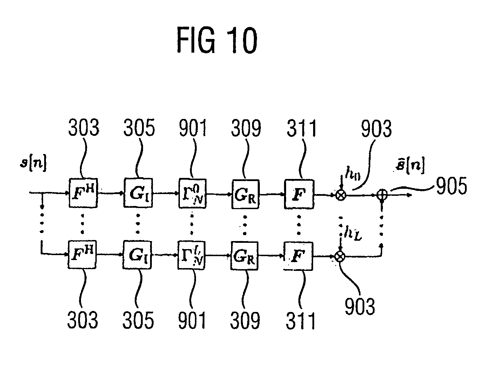

Unlike the communication system of Fig. 3, the system model shown in Fig. 9 comprises L+1 delay blocks 901, wherein each delay block 901 is associated with a corresponding propagation path. In other words, the channel delay blocks 901 represent the channel delays in time domain as the long-term characteristic of the channel as the multipath delay characteristic of the communication channel. In order to take the short-term CSI into account, each communication path is associated with a multiplier 903. At the receiver, the received versions are superimposed, wherein the superposition is represented by the adder 905. For the sake of descriptional simplicity, it is assumed, that a sufficient guard interval is chosen, so that there is no ISI and ICI. Furthermore, channel noise is not explicitly taken into consideration in the embodiment shown in Fig. 9 for brevity. The goal now is to find conditions for the signal processing design at the transmitter which take into account not only the long-term channel state information but also the signal processing at the receiver. To do so, the system model shown in Fig. 9 is transformed into an equivalent system model shown in Fig. 10.

The system model shown in Fig. 10 reflects the system's linearity, so that each communication path can separately be considered. Furthermore, due to linearity, the channel taps associated with the short-term CSI can be shifted to the right-hand side.

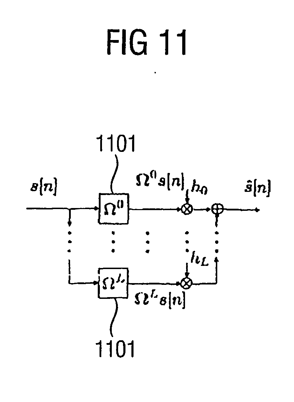

In a next transformation step, the system model shown in Fig. 10 can be transformed into an equivalent system model shown in Fig. 11.

The system model shown in Fig. 11 comprises L+1 blocks 1101, wherein each block 1101 is associated with a particular propagation path of L+1 propagation path. When compared to the embodiment shown in Fig. 10, the blocks 1101 represent an operation of the respective concatenated blocks 303, 305, 901, 309, and 311. In other words, the blocks 1101 represent a composite operation with respect to the previously-mentioned operation blocks.

In order to describe the system's behavior a part of an equation of interest is written for convenience.

$$FG_R\Gamma_N^l G_I F^H \; = \; \Omega^l, \, \forall l \, .$$

Now, it can be recognized, that there are L+1 conditions, wherein the short-term CSI is explicitly excluded.

The OFDM modulation transforms each path delay to the diagonal matrix having a power of Fourier coefficients as diagonal elements.

It is to be noted, that the above transformation of the system model is based upon the assumption, that the guard interval is larger than the maximum delay of the communication channel. However, this assumption is not always fulfilled which will be discussed later. The above considerations provide an analytical basis for further analysis in order to provide weighting coefficients to be used by the inventive means for weighting in order to keep the orthogonality of the received multicarrier signal regardless of the short-term channel state information.

In the presence of long channel delays exceeding the guard intervals, there are ISI and ICI. In accordance with the present invention, this can be expressed by the following equation, wherein a SISO communication channel is considered for the sake of descriptional simplicity.

$$\hat{s}[n] = FG_R H_0 G_I F^H s[n] + FG_R H_1 G_I F^H s[n-1]$$

$$= FG_R \sum_{l=0}^{L} h_l \Gamma_N^l G_I F^H s[n] + FG_R \sum_{l=1}^{L} h_l \Gamma_N^{N-l,T} G_I F^H s[n-1]$$

$$= FG_R \sum_{l=0}^{N_g} h_l \Gamma_N^l G_I F^H s[n]$$

$$+ FG_R \sum_{l=N_g+1}^{L} h_l \Gamma_N^l G_I F^H s[n]$$

$$+ FG_R \sum_{l=N_g+1}^{L} h_l \Gamma_N^{N-l,T} G_I F^H s[n-1]$$

where the noise term is not included for simplicity. The first term on the right-hand side of the above equation is associated with the delay components within the guard interval. Thus, this term can be transformed into

$$\sum_{l=0}^{N_g} h_l \Omega^l s[n],$$

which has diagonal structure. The orthogonality holds and the $N_g$-th order diversity can be achieved. The middle term of the above equation comprises the path delays exceeding the guard interval and it does not pass the diagonal structure.

Since the diagonal structure is not kept, it is considered as the ICI which should be, ideally, be mitigated. However, these components may introduce a potentially additional ($L - N_g$)-th diversity due to the multipath channel which can be exploited for improving the system's performance. Contrary thereto, the last term on the right-hand side of the above equation represents the ISI due to the previously transmitted signal s[n-1] and must, therefore, be suppressed.

Starting from the above derivation, the inventive precoding approach will analytically be explained. As mentioned above, the previous descriptions were based on the SISO channel model for the sake of explanatory simplicity. It is to be noted, that the inventive precoding scheme can be applied to both: to a SISO scheme and to a MISO scheme, as previously mentioned. Therefore, in the following, the inventive precoding scheme will be explained for the case of a MISO scenario, wherein the SISO scenario can be considered as a special case of the MISO scenario.

As mentioned above, the inventive precoding scheme can also be applied to beamforming, when the inventive means for weighting explicitly takes the steering vectors previously-mentioned into consideration in order to weight the multicarrier such that the transmission beams are preferably directed towards propagation paths being associated with the shortest channel delays.

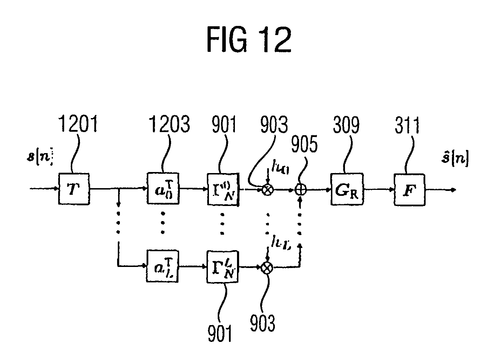

Fig. 12 shows an embodiment of the inventive apparatus for precoding a multicarrier signal in accordance with a further embodiment of the present invention.

The system model shown in Fig. 12 comprises the inventive apparatus for precoding 1201 within a system model on MISO channels for designing the inventive apparatus for precoding comprising an inventive precoding filter denoted by T.

In Fig. 12, L+1 communication paths are explicitly depicted. Each channel path is indexed by 1 and is characterized by a complex valued channel tap coefficient $h_1$. Furthermore, each propagation path is associated with a path delay $\Gamma_N^1$, as previously-mentioned.

Unlike the previously-described embodiments, the system model shown in Fig. 12 comprises L+1 steering blocks 1203, wherein each propagation path is associated with a steering block 1203. Furthermore, the steering blocks 1203 are arranged between the inventive preceding filter 1201 and the corresponding propagation delay block 901.

The steering blocks 1203 express the nature of the channel when multiple antennas are applied. That means that the transmitted signals are combined spacially in certain directions (due to spatial correlations) due to a narrow band assumption and far field assumption (resulting in planar waves). The mathematical transpose operator of the array steering vectors $a_1^T$ explains the spatial combining as nature of the channel.

Since the inventive precoding filter 1201 shown in Fig. 12 takes only the long-term CSI into account as channel information, due to the system's linearity, the channel taps represented by the multipliers 903 can be moved towards the receiver's side, as described above.

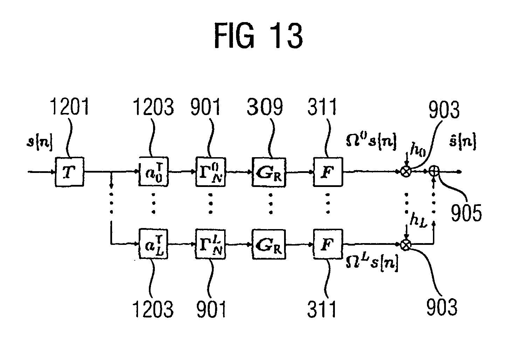

Fig. 13 shows a linearly transformed system model in the case of a MISO channel to be used in the following for designing the inventive precoding filter T.

Fig. 13 also shows the conditions for the precoding filter in order to satisfy the ICI reduction requirements for each path delay. These conditions can be expressed by the following equation

$$G_R\left(\Gamma_N^1 \otimes a_1^T\right)Ts[n] = F^H\Omega^1 s[n] \qquad 0 \le 1 \le L.$$

It is to be noted, that the inverse Fourier transform $F^H$ is multiplied from left in order to obtain the aim of equation. The optimization goal is to obtain a full diversity from the available multipath of the order L and, simultaneously, to avoid the ICI for $l > N_g$ and therefore to keep the orthogonality among subcarriers. In order to avoid the ISI, the path delays exceeding the guard interval should explicitly be considered. The conditions for avoiding the ISI can be written as

$$J_1 G_R\left(\Gamma_N^{N-1,T} \otimes a_1^T\right)Ts[n] = 0_{(1-N_g)\times N_c} \qquad N_g + 1 \le 1 \le L,$$

where

$$J_1 = \left[1_{1-N_g} \ 0_{(1-N_g)\times(N-1)}\right] \in R^{(1-N_g)\times N_c},$$

is multiplied from left so that only ($l$ - $N_g$) conditions remain for ($N_g$ + 1 $\leq$ $l$ $\leq$ L) because only the signal exceeding the guard interval is of interest for avoiding the ISI.

Ideally, the above conditions have to be satisfied by the precoding filter T. However, once the maximum delay of the channel exceeds the guard interval, ($N_g$ < L), then the resulting interferences and the diversity gain from the path exceeding the guard interval contradict each other. Therefore, an optimum compromise under certain criterion has to be found. By the way of example, in the following a minimum mean square error criterion (MMSE) is applied in order to find the optimum solution for the precoding filter T, which will be explained in the following.

Firstly, the above conditions are collected into one equation system. Then, the estimated signal $\hat{u}[n]$ is formed in the long-term sense

$$\hat{u}[n] = \begin{bmatrix} G_R\left(\Gamma_N^0 \otimes a_0^T\right) \\ \vdots \\ G_R\left(\Gamma_N^L \otimes a_L^T\right) \\ J_{N_g+1}G_R\left(\Gamma_N^{N_c-1,T} \otimes a_{N_g+1}^T\right) \\ \vdots \\ J_L G_R\left(\Gamma_N^{N-L,T} \otimes a_L^T\right) \end{bmatrix} Ts[n] + \tilde{\eta}' = \Phi Ts[n] + \tilde{\eta}',$$

where the white noise term $\tilde{\eta}'$ of variance $\sigma_\eta^2$ is also explicitly taken into account. In this context, the matrix $\Phi$ is

$$\Phi = \begin{bmatrix} G_R\left(\Gamma_N^0 \otimes a_0^T\right) \\ \vdots \\ G_R\left(\Gamma_N^L \otimes a_L^T\right) \\ J_{N_g+1}G_R\left(\Gamma_N^{N_c-1,T} \otimes a_{N_g+1}^T\right) \\ \vdots \\ J_L G_R\left(\Gamma_N^{N-L,T} \otimes a_L^T\right) \end{bmatrix}$$

The dimension of $\Phi$ is $p \times MN$, where p is

$$p = N_c(L + 1) + \frac{1}{2}(L - N_g)(L - N_g + 1).$$

The desired signal in the long-term sense is

$$u[n] \;=\; \begin{bmatrix} F^H \Omega^0 \\ \vdots \\ F^H \Omega^L \\ 0_{1 \times N_c} \\ \vdots \\ 0_{(L-N_g) \times N_c} \end{bmatrix} s[n] \;=\; \Psi s[n].$$

From the above equation, the optimization problem can be written as

$$[T, \beta] \;=\; \arg \min_{T, \beta} E\left[\left\| u[n] - \beta \hat{u}[n] \right\|_2^2\right] \qquad\qquad E\left[\left\| T s[n] \right\|_2^2\right] \;=\; E_{Tx}$$

with the constraint on the transmit power of $E_{Tx}$. This optimization problem can be solved for example using the Lagrangian function.

The optimum solution for the coefficients of the precoding filter (weighting coefficients) is

$$T \;=\; \beta_{opt}^{-1} \left( \Phi^H \Phi + \frac{p \sigma_\eta^2}{E_{Tx}} 1 \right)^{-1} \Phi^H \Psi ,$$

where the optimum weighting factor $\beta_{opt}^{-1}$ is

$$\beta_{opt}^{-1} \;=\; \sqrt{ \frac{E_{Tx}}{tr\left( \left( \Phi^H \Phi + \frac{p \sigma_\eta^2}{E_{Tx}} 1 \right)^{-2} \Phi^H \Psi \Psi^H \Phi \right)} } ,$$

where 'tr' denotes the trace operator. The precoding filter provided by the above equation can also be considered as being a transmit Wiener filter due to its optimization criterion.

It is to be noted, that the weighting coefficients can also be obtained from a solution of an optimization approach which is different than the MMSE approach. For example, the weighting coefficients can also be provided by applying, for example, a maximum likelihood criterion to solving the above optimization problem. In Simon Haykin, Adaptive Filter Theory, 4th edition, Prentice Hall, 2002, a plurality of optimization approaches suitable for providing the inventive weighting coefficients is described.

As mentioned above, the above calculations provide a solution for a possible set of weighting coefficients to be used by the inventive weighting filter for the case of beamforming represented by the steering vectors. For the SISO scenario, the steering vector is equal to one. The above considerations are therefore valid also for the SISO scenario.

As can be seen from the above formulations, the inventive precoding filter spreads the signal into space and time simultaneously while the beamforming approach spreads the signal in time (CP extension), then, in space by using the beamforming vectors (steering vectors).

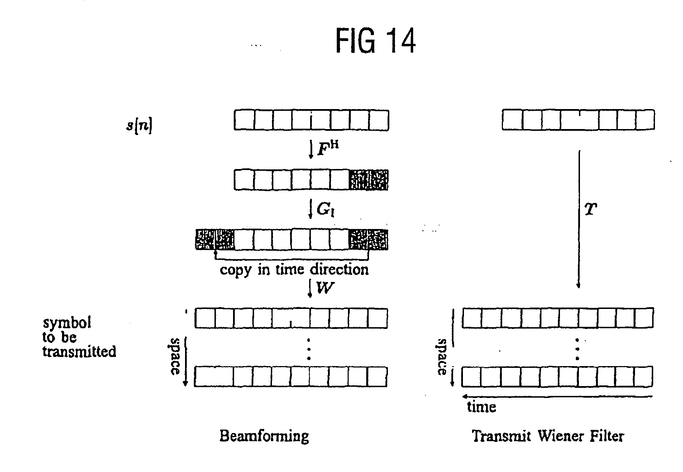

Fig. 14 demonstrates a difference between the conventional multicarrier modulation scheme and applying beamforming and the inventive precoding approach for the case of beamforming.

In the left diagram of Fig. 14, a multicarrier signal is first transformed into time domain. Subsequently, guard interval is introduced, which is a copy of a number of last coefficients to be transmitted in time direction. Afterwards, the symbol to be transmitted is spread in space by shifting phase for each antenna so that the energy of the transmitted signal is concentrated in certain direction, which are, for example, associated with the propagation paths.

Contrary thereto, the inventive precoding filter simultaneously transforms the multicarrier signal into the precoded signal which is spread in time and space. Additionally, the inventive transmit Wiener filter simultaneously and explicitly comprises channel delays, as depicted above.

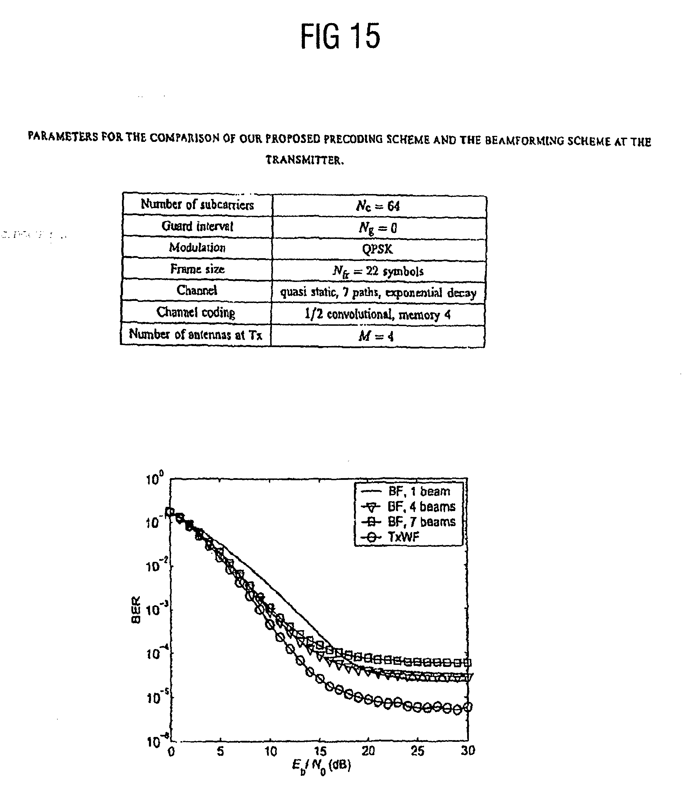

Fig. 15 demonstrates a performance of the inventive transmit Wiener filter compared to conventional beamforming with respect to the bit error ratio, wherein a different number of beams is taken into consideration. The simulation parameters are summarized in the above-depicted table. The guard interval size is set to zero as an extreme case of the insufficient guard interval, so that all channel delays exceed the guard interval. The initial simulation results shown in Fig. 15 demonstrate, that there is a crossover point among different number of beams for the beamforming approach as previously discussed. However, the inventive precoding filter (the transmit Wiener filter) for the MISO case clearly outperforms the beamforming approach.

The inventive precoding filter described above comprises a set of weighting coefficients, which are arranged in a weighting matrix. As described above, the weighting matrix may comprise a concatenation of a first matrix and a second matrix. For example, the first matrix comprises the path delays. The second matrix comprises Fourier coefficients. Moreover, the second matrix may comprise inverse Fourier coefficients. For example, the first matrix may comprise the matrix $\Phi$ described above. Accordingly, the second matrix may be the matrix $\Psi$.

Using these matrices, the means for weighting is then operative to multiplying the set of multicarrier values comprised by the multicarrier signal by the weighting matrix. In other words, the means for weighting performs a matrix by vector multiplication.

Accordingly, the first matrix may comprise a concatenation of a first submatrix and a second submatrix. In this case, the first submatrix comprises, for example, the previously-mentioned L-path delays. In other words, the first submatrix may be the matrix $\Phi^H$.

The second submatrix may comprise, for example, an inverse of a multiplication of the first submatrix by the first submatrix in a conjugated and transposed form, as previously-described in connection with the inventive approach for determining the weighting coefficients of the inventive precoding filter. Additionally, the second submatrix may further comprise the channel noise power. For example, the second sumbatrix is the following matrix described above

$$\left( \Phi^H \Phi + \frac{p\sigma_\eta^2}{E_{Tx}} 1 \right)^{-1}.$$

As described above, the inventive means for weighting may be further operative for weighting the multicarrier signal such that the time spread precoded signal is further spread in space. In this case, the set of weighting coefficients comprises a set of steering vectors, wherein the set of steering vectors comprises a first steering vector associated with the first propagation path, and wherein a second steering vector is associated with the second propagation path. The inventive means for weighting may be operative to weight the multicarrier signal by the weighting matrix, which can be a matrix filter. Since each weighting vector (or each column of the matrix) differs for each element of the vector which is multiplied by the matrix filter, the matrix filter can be considered as being a multirate filter bank. Contrary to the inventive precoding using steering vectors, in the conventional beamforming approach, all elements of a vector are multiplied by the same vector

$$\sum_{l=0}^{N_b} a_l^* .$$

That means that the same spreading in space is performed for all time domain signals arranged in the vector, whereas the matrix filter does it differently. In other words, conventional beamforming does not introduce any influence among time domain signals arranged in the vector, which is the case when using the inventive matrix filter. Additionally, the inventive matrix filter spreads the signal in time domain and in the space domain at the same time.

Generally, the communication channel may comprise L+1 propagation paths being associated with L+1 path delays being shorter to or greater than the length of the predetermined guard interval. Moreover, the communication channel may comprise a further number of propagation paths being associated with path delays exceeding the length of the guard interval. Now, the means for weighting is operative to multiply the set of multicarrier coefficients by the weighting matrix described above, for example by the weighting matrix determined by the inventive optimization scheme described above. Preferably, the weighting matrix also comprises steering vectors, so that the preceded signal is spread in both: in time and in space. To do so, the transmitting point is, for example, operative for transmitting transmission beams to be controlled, so that the precoded signal is transmitted, preferably, via the L+1 propagation paths. If the inventive precoding approach is not to be performed, then the steering vector may be set to one, so that the inventive means for weighting is only operative for time spreading, so that the precoded signal has a length of N, as described above.

In order to determine the set of weighting coefficients to be used for weighting the multicarrier signal, the means for weighting may comprise the previously-mentioned means for determining the weighting coefficients. Preferably, the means for determining the weighting coefficients is operative for solving the optimization function described above in a minimum mean squared error sense. As described above, the means for determining may obtain the solution on the basis of a desired signal without ISI and on the basis of an estimated signal, which is corrupted by ISI and ICI, wherein the estimated signal reflects the channel influence only with respect to the path delays.

Furthermore, the present invention provides an inventive multicarrier transmitter for providing a precoded signal to be transmitted through a multipath communication channel, wherein the multicarrier transmitter comprises means for providing an information signal comprising a number of values, and an assigner for assigning the number of values to discrete carrier frequencies associated with a multicarrier modulation scheme to provide a multicarrier signal. For example, the assigner performs a block interleaving operation. Additionally, the multicarrier transmitter comprises the apparatus in accordance with the above descriptions for providing the precoded signal from the multicarrier signal. If the inventive multicarrier transmitter is to be used within an OFDM scenario, then the conventional OFDM modulation structure consisting of an IFFT transformer and of a cyclic prefix inserter is, in accordance with the present invention, replaced by the inventive apparatus for providing the precoded signal.

The inventive multicarrier transmitter may be further operative for communicating with an OFDM receiver. For example, the multicarrier transmitter is operative for transmitting guard interval information to the receiver so that a length of the guard interval is adaptively determined, whereby the long-term channel characteristic is explicitly taken into consideration.

Furthermore, the present invention also provides a multicarrier receiver for providing a received information signal from a received version of a precoded signal transmitted by the previously-mentioned inventive multicarrier transmitter. The multicarrier receiver comprises an OFDM demodulator for demodulating the received version of the precoded signal in order to provide the received information signal. The OFDM demodulator may be, for example, a conventional OFDM demodulator being operative for removing the guard interval and for transforming the time domain signal back to frequency domain. Preferably, the OFDM demodulator further comprises means for receiving the signaling information, so that a means for removing the guard interval can be controlled in order to adaptively adjust the length of the guard interval to be removed depending on a length of guard interval selected by the multicarrier transmitter.

Additionally, the inventive multicarrier receiver comprises means for determining the first path delay and the second path delay from the received version of the precoded signal. Since the multicarrier transmitter comprises the inventive apparatus for providing the precoded signal, wherein the means for weighting is operative for explicitly taken into account the path delays, the inventive multicarrier receiver may further comprise a means for transmitting the estimated first path delay and the second path delay to the multicarrier transmitter. For example, the means for determining the first path delay and the second path delay is operative for determining an autocorrelation function of the received version of the precoded signal and for extracting the first path delay and the second path delay from the autocorrelation matrix, as described above.

In order to obtain the channel parameters, the transmitter may be further operative for estimating the channel parameters from the uplink signals (mobile to base). This is based on the reciprocity of the channel for the uplink (A transpose of a channel matrix for the uplink is valid for the downlink). In addition to the delays, the direction of departure may also be estimated from the uplink (actually estimated values are called direction of arrival for the uplink signal reception). In this case the calibration due to the frequency difference between the uplink and the downlink might be necessary.

Depending on certain implementation requirements of the inventive methods, the inventive methods can be implemented in hardware or in software. The implementation can be performed using a digital storage medium, in particular a disc or a CD having electronically readable control signals stored thereon, which can cooperate with a programmable computer system such that the inventive methods are performed. Generally, the present invention is, therefore, a computer program product with a program code stored on a machine readable carrier, the program code performing the inventive methods, when the computer program product runs on a computer. In other words, the inventive methods are, therefore, a computer program having a program code, for performing the inventive methods, when the computer program runs on a computer.

**Claims**

1. Apparatus for precoding a multicarrier signal to provide a precoded signal, the multicarrier signal comprising a set of multicarrier values, each value of the set of values being associated with a carrier frequency of a number of carrier frequencies of a multicarrier modulation scheme, wherein the precoded signal is to be transmitted through a multipath communication channel comprising a first path associated with a first path delay, and a second path associated with a second path delay, wherein the first path delay is larger than a length of a predetermined guard interval to be removed in a multicarrier receiver, the multipath communication channel comprising long-term channel state information and short-term channel state information, wherein the long-term channel state information characterizes path delays and wherein the short-term channel state information is referred to fading coefficients, the apparatus comprising:

   means (111) for providing information on the first path delay and on the second path delay;
   means (103) for weighting the multicarrier signal using a set of weighting coefficients, the weighting coefficients being based on the long-term channel state information and being not based on the short-term channel state information, wherein the means (103) for weighting is operative for weighting the multicarrier signal such that a time-spread signal is obtained as the precoded signal, wherein a length of the time-spread signal corresponds to a sum of a length of the multicarrier signal and of the length of the predetermined guard interval.

2. Apparatus in accordance with claim 1, wherein the multipath communication channel has a multipath delay characteristic comprising the first path delay and the second path delay, wherein, due to the multipath delay characteristic, intersymbol interferences occur, and
   wherein the set of weighting coefficients is based on the multipath delay characteristic.

3. Apparatus in accordance with claim 1 or 2, wherein the set of weighting coefficients is based on the first path delay and the second path delay.

4. Apparatus in accordance with claim 1 to 3, wherein the set of weighting coefficients is based on the length of the predetermined guard interval.

5. Apparatus in accordance with claims 1 to 4, wherein the set of weighting coefficients is based on Fourier coefficients associated with a Fourier transform and/or Fourier coefficients associated with an inverse Fourier transform.

6. Apparatus in accordance with claim 5, wherein the set of weighting coefficients is arranged in a weighting matrix comprising a concatenation of a first matrix and of a second matrix, wherein the first matrix comprises the path delays ($\Gamma$) and wherein the second matrix comprises the Fourier coefficients (F) and/or the inverse Fourier coefficients ($F^H$), and
   wherein the means (103) for weighting is operative for multiplying the set of multicarrier values by the weighting matrix.

7. Apparatus in accordance with claim 6, wherein the second matrix comprises a concatenation of an inverse Fourier transform matrix comprising coefficients associated with a inverse Fourier transform, and of a matrix ($\Omega$) comprising coefficients in the diagonal associated with a Fourier transform of the path delays.

8. Apparatus in accordance with claim 6 or 7, wherein the first matrix comprises a concatenation of a first submatrix and of a second submatrix, wherein the first submatrix comprises the L path delays ($\Gamma$), and wherein the second submatrix comprises an inverse of a multiplication of the first submatrix by the first submatrix in a conjugated and transposed form.

9. Apparatus in accordance with claims 1 to 8, wherein the means (111) for providing the information is further operative for providing information on channel noise power, and
   wherein the set of weighting coefficients is based on the channel noise power.

10. Apparatus in accordance with claims 1 to 9, wherein a plurality of antennas is used for transmission, wherein the means (111) for weighting is further operative for weighting the multicarrier signal such that the time-spread signal is further spread in space by using the set of weighting coefficients which is based on a set of steering vectors, wherein the set of steering vectors comprises a first steering vector associated with the first propagation path, and a second steering vector associated with the second propagation path.

11. Apparatus in accordance with claim 1 to 10, wherein the communication channel comprises L+1 propagation paths associated with L+1 path delays being shorter to or greater than the length of the guard interval, and wherein a further number of propagation paths is associated with path delays exceeding the length of the guard interval, wherein the multicarrier signal comprises a set of multicarrier values associated with $N_c$ carrier frequencies, wherein the means (103) for weighting comprises a set of weighting coefficients arranged in a weighting matrix, wherein the means for weighting is operative for multiplying the set of multicarrier coefficients by the weighting matrix, wherein the weighting matrix is

$$T = \beta_{opt}^{-1}\left(\Phi^H\Phi + \frac{p\sigma_\eta^2}{E_{Tx}}1\right)^{-1}\Phi^H\Psi$$

wherein $\Phi$ denotes a matrix comprising the path delays,

$$\begin{bmatrix} G_R\left(\Gamma_N^0 \otimes a_0^T\right) \\ \vdots \\ G_R\left(\Gamma_N^L \otimes a_L^T\right) \\ J_{N_g+1}G_R\left(\Gamma_N^{N_c-1,T} \otimes a_{N_g+1}^T\right) \\ \vdots \\ J_L G_R\left(\Gamma_N^{N-L,T} \otimes a_L^T\right) \end{bmatrix} = \Phi$$

wherein $\Gamma$ denotes a shift matrix containing the path delay of a 1-th propagation path, wherein $G_R$ is a matrix representing an operation associated with removing the guard interval, wherein $\Psi$ denotes a matrix

$$\Psi = \begin{bmatrix} F^H\Omega^0 \\ \vdots \\ F^H\Omega^L \\ 0_{1\times N_c} \\ \vdots \\ 0_{(L-N_g)\times N_c} \end{bmatrix}$$

wherein $F^H$ denotes an inverse Fourier transform matrix, wherein $\Omega^1$ denotes a diagonal matrix

$$\Omega^1 = \mathrm{diag}\left(1 \; w^1 \; w^{21} \cdots w^{1(N_c-1)}\right) \quad wherein \;\; w = e^{-j2\pi/N_c}$$

associated with the 1-th propagation path, wherein $\sigma_\eta^2$ denotes a channel noise power,

wherein $E_{Tx}$ denotes a transmit power, wherein p is a scalar, wherein $\beta_{opt}^{-1}$ is a weighting factor

$$\beta_{opt}^{-1} = \sqrt{\frac{E_{Tx}}{tr\left(\left(\Phi^H\Phi + \frac{p\sigma_\eta^2}{E_{Tx}}1\right)^{-2}\Phi^H\Psi\Psi^H\Phi\right)}}$$

wherein tr() denotes a trace operator, and

wherein the precoded signal is to be transmitted by a transmitting point, wherein $N_g$ is the guard interval length, L denotes a delay and

$$N = N_c + N_g$$

wherein $a_1^T$ denotes a transposed steering vector associated with beamforming towards the 1-th propagation path, wherein $a_1^T$ is 1, when the weighting matrix is only operative for time-spreading.

12. Apparatus according to claims 1 to 11, wherein the means (111) for providing the information on the first path delay and on the second path delay is operative for receiving the information on the first path delay and on the second path delay from the multicarrier receiver and to provide the information to the means (103) for weighting.

13. Apparatus in accordance with claims 1 to 12, wherein the means (111) for providing the information comprises a storage element for storing a plurality of channel delay profiles, wherein each channel delay profile is associated with a certain transmission scenario, and
wherein the means (111) for providing the information is operative for selecting a current channel delay profile corresponding to a current transmission scenario, and for providing a corresponding information on the first path delay and on the second path delay, the corresponding information being comprised by the current channel delay profile, to the means (103) for weighting.

14. Apparatus in accordance with claims 1 to 13, wherein the means (111) for providing the information is operative for estimating the first path delay and the second path delay from a received version of a signal transmitted by the multicarrier receiver.

15. Apparatus in accordance with claims 1 to 14, wherein the multicarrier signal comprises a set of multicarrier values, wherein the means (103) for weighting is operative for weighting the set of multicarrier values using a set of weighting coefficients, wherein the apparatus for precoding further comprises means for determining the weighting coefficients.

16. Apparatus in accordance with claim 15, wherein the means for determining is operative for receiving the information on the first path delay and on the second path delay as the only channel information, and for determining the weighting coefficients by explicitly taking the information on the first path delay and on the second path delay into consideration.

17. Apparatus in accordance with claim 15 or 16, wherein the set of weighting coefficients is arranged in a weighting matrix, wherein the means for determining the weighting coefficients is operative for solving the optimization function

$$[T, \beta] = \arg\min_{T, \beta} E\left[\|u[n] - \beta\hat{u}[n]\|_2^2\right]$$

in a minimum mean squared error sense,
wherein T denotes the weighting matrix, $\beta$ is a weighting factor, u(n) denotes a desired signal without intersymbol interferences and without intercarrier interferences, $\hat{u}$(n) denotes an estimated signal being corrupted by intersymbol interferences and without intercarrier interferences, wherein the estimated signal reflects only the path delays as the channel influence.

**18.** Multicarrier transmitter for providing a precoded signal to be transmitted through a multipath communication channel, comprising:

means for providing an information signal comprising a number of values, the information signal comprising information to be transmitted through the multipath communication channel;
an assigner for assigning the number of values to discrete carrier frequencies associated with a multicarrier modulation scheme to provide a multicarrier signal;
the apparatus in accordance with claims 1 to 17 for providing the precoded signal from the multicarrier signal.

**19.** Method for precoding a multicarrier signal to provide a precoded signal, the multicarrier signal comprising a set of values, each value of the set of values being associated with a carrier frequency of a number of carrier frequencies of a multicarrier modulation scheme, wherein the precoded signal is to be transmitted to a multipath communication channel comprising a first path associated with a first path delay, and a second path associated with a second path delay, wherein the first path delay is larger than a length of a predetermined guard interval to be removed in a multicarrier receiver, the multipath communication channel comprising long-term channel state information and short-term channel state information, wherein the long-term channel state information characterizes path delays and wherein the short-term channel state information is referred to fading coefficients, the method comprising the following steps of:

providing an information on the first path delay and on the second path delay; and
weighting the multicarrier signal using a set of weighting coefficients, the weighting coefficients being based on the long-term channel state information and being not based on the short-term channel state information, wherein the multicarrier signal is weighted such that a time-spread signal is obtained as the precoded signal, wherein a length of the time-spread precoded signal corresponds to a sum of a length of the multicarrier signal and of the length of the predetermined guard interval.

**20.** Method for providing a precoded signal to be transmitted through a multipath communication channel, comprising the following steps of:

providing an information signal comprising a number of values, the information signal comprising information to be transmitted through the multipath communication channel;
assigning the number of values to discrete carrier frequencies associated with the multicarrier modulation scheme to provide a multicarrier signal;
performing the method for precoding the multicarrier signal in accordance with claim 19 to provide the precoded signal.

**21.** Computer program having a program code adapted to perform the method in accordance with claim 19 or 20, when the program runs on a computer.

**Patentansprüche**

**1.** Vorrichtung zum Vorcodieren eines Mehrträgersignals zur Bereitstellung eines vorcodierten Signals, wobei das Mehrträgersignal einen Satz von Mehrträgerwerten aufweist, wobei jeder Wert des Satzes von Werten einer Trägerfrequenz einer Anzahl von Trägerfrequenzen eines Mehrträgermodulationsschemas zugeordnet ist, wobei das vorcodierte Signal durch einen Mehrwegekommunikationskanal übertragen werden soll, der einen ersten Weg, der einer ersten Wegverzögerung zugeordnet ist, und einen zweiten Weg, der einer zweiten Wegverzögerung zugeordnet ist, aufweist, wobei die erste Wegverzögerung größer ist als eine Länge eines zu entfernenden vorbestimmten Schutzintervalls in einem Mehrträgerempfänger, wobei der Mehrwegekommunikationskanal Langzeitkanalzustandsinformationen und Kurzzeitkanalzustandsinformationen aufweist, wobei die Langzeitkanalzustandsinformationen Wegverzögerungen kennzeichnen, und wobei die Kurzzeitkanalzustandsinformationen sich auf Schwundkoeffizienten beziehen, wobei die Vorrichtung folgende Merkmale aufweist:

eine Einrichtung (111) zum Bereitstellen von Informationen über die erste Wegverzögerung und über die zweite Wegverzögerung;
eine Einrichtung (103) zum Gewichten des Mehrträgersignals unter Verwendung eines Satzes von Gewichtungskoeffizienten, wobei die Gewichtungskoeffizienten auf den Langzeitkanalzustandsinformationen basieren und nicht auf den Kurzzeitkanalzustandsinformationen basieren, wobei die Einrichtung (103) zum Gewichten zum derartigen Gewichten des Mehrträgersignals wirksam ist, dass ein zeitlich gestreutes Signal als das vorcodierte Signal erhalten wird, wobei eine Länge des zeitlich gestreuten Signals einer Summe einer Länge des Mehrträgersignals und der Länge des vorbestimmten Schutzintervalls entspricht.

2. Vorrichtung gemäß Anspruch 1, bei der der Mehrwegekommunikationskanal eine Mehrwegeverzögerungscharakteristik aufweist, die die erste Wegverzögerung und die zweite Wegverzögerung aufweist, wobei aufgrund der Mehrwegeverzögerungscharakteristik Intersymbolstörungen auftreten, und
wobei der Satz von Gewichtungskoeffizienten auf der Mehrwegeverzögerungscharakteristik basiert.

3. Vorrichtung gemäß Anspruch 1 oder 2, bei der der Satz von Gewichtungskoeffizienten auf der ersten Wegverzögerung und der zweiten Wegverzögerung basiert.

4. Vorrichtung gemäß einem der Ansprüche 1 bis 3, bei der der Satz von Gewichtungskoeffizienten auf der Länge des vorbestimmten Schutzintervalls basiert.

5. Vorrichtung gemäß einem der Ansprüche 1 bis 4, bei der der Satz von Gewichtungskoeffizienten auf Fourier-Koeffizienten, die einer Fourier-Transformation zugeordnet sind, und/oder Fourier-Koeffizienten, die einer inversen Fourier-Transformation zugeordnet sind, basiert.

6. Vorrichtung gemäß Anspruch 5, bei der der Satz von Gewichtungskoeffizienten in einer Gewichtungsmatrix angeordnet ist, die eine Verkettung einer ersten Matrix und einer zweiten Matrix aufweist, wobei die erste Matrix die Wegverzögerungen (r) aufweist, und wobei die zweite Matrix die Fourier-Koeffizienten (F) und/oder die inversen Fourier-Koeffizienten ($F^H$) aufweist, und
wobei die Einrichtung (103) zum Gewichten zum Multiplizieren des Satzes von Mehrträgerwerten mit der Gewichtungsmatrix wirksam ist.

7. Vorrichtung gemäß Anspruch 6, bei der die zweite Matrix eine Verkettung einer Invers-Fourier-Transformationsmatrix, die Koeffizienten aufweist, die einer inversen Fourier-Transformation zugeordnet sind, und einer Matrix ($\Omega$), die Koeffizienten in der Diagonalen aufweist, die einer Fourier-Transformation der Wegverzögerungen zugeordnet sind, aufweist.

8. Vorrichtung gemäß Anspruch 6 oder 7, bei der die erste Matrix eine Verkettung einer ersten Untermatrix und einer zweiten Untermatrix aufweist, wobei die erste Untermatrix die L Wegverzögerungen ($\Gamma$) aufweist, und wobei die zweite Untermatrix ein Inverses einer Multiplikation der ersten Untermatrix mit der ersten Untermatrix in einer konjugierten und transponierten Form aufweist.

9. Vorrichtung gemäß einem der Ansprüche 1 bis 8, bei der die Einrichtung (111) zum Bereitstellen der Informationen ferner zum Bereitstellen von Informationen über Kanalrauschleistung wirksam ist, und
wobei der Satz von Gewichtungskoeffizienten auf der Kanalrauschleistung basiert.

10. Vorrichtung gemäß einem der Ansprüche 1 bis 9, bei der eine Mehrzahl von Antennen zur Übertragung verwendet wird, wobei die Einrichtung (111) zum Gewichten ferner zum derartigen Gewichten des Mehrträgersignals wirksam ist, dass das zeitlich gestreute Signal ferner unter Verwendung des Satzes von Gewichtungskoeffizienten, der auf einem Satz von Steuervektoren basiert, im Raum gestreut wird, wobei der Satz von Steuervektoren einen ersten Steuervektor, der dem ersten Ausbreitungsweg zugeordnet ist, und einen zweiten Steuervektor, der dem zweiten Ausbreitungsweg zugeordnet ist, aufweist.

11. Vorrichtung gemäß einem der Ansprüche 1 bis 10, bei der der Kommunikationskanal L + 1 Ausbreitungswege aufweist, die L + 1 Wegverzögerungen zugeordnet sind, die kleiner oder größer als die Länge des Schutzintervalls sind, und wobei eine weitere Anzahl von Ausbreitungswegen Wegverzögerungen zugeordnet ist, die die Länge des Schutzintervalls überschreiten, wobei das Mehrträgersignal einen Satz von Mehrträgerwerten aufweist, die $N_c$ Trägerfrequenzen zugeordnet sind, wobei die Einrichtung (103) zum Gewichten einen Satz von Gewichtungskoeffizienten aufweist, die in einer Gewichtungsmatrix angeordnet sind, wobei die Einrichtung zum Gewichten zum Multiplizieren des Satzes von Mehrträgerkoeffizienten mit der Gewichtungsmatrix wirksam ist, wobei die Gewichtungsmatrix die folgende ist:

$$T = \beta_{opt}^{-1}\left(\Phi^H\Phi + \frac{p\sigma_\eta^2}{E_{Tx}}\mathbf{1}\right)^{-1}\Phi^H\Psi$$

wobei Φ eine Matrix bezeichnet, die die Wegverzögerungen aufweist,

$$\begin{bmatrix} G_R\left(\Gamma_N^0 \otimes a_0^T\right) \\ \vdots \\ G_R\left(\Gamma_N^L \otimes a_L^T\right) \\ J_{N_g+1}G_R\left(\Gamma_N^{N_c-1,T} \otimes a_{N_g+1}^T\right) \\ \vdots \\ J_L G_R\left(\Gamma_N^{N-L,T} \otimes a_L^T\right) \end{bmatrix}$$

wobei Γ eine Verschiebungsmatrix bezeichnet, die die Wegverzögerung eines l-ten Ausbreitungswegs beinhaltet, wobei $G_R$ eine Matrix ist, die eine Operation darstellt, die einem Entfernen des Schutzintervalls zugeordnet ist, wobei Ψ folgende Matrix bezeichnet:

$$\Psi = \begin{bmatrix} F^H\Omega^0 \\ \vdots \\ F^H\Omega^L \\ 0_{1\times N_c} \\ \vdots \\ 0_{(L-N_g)\times N_c} \end{bmatrix}$$

wobei $F^H$ eine Invers-Fourier-Transformationsmatrix bezeichnet, wobei $\Omega^l$ folgende Diagonalmatrix bezeichnet:

$$\Omega^l = \mathrm{diag}\left(1 \; w^l \; w^{2l} \cdots w^{l(N_c-1)}\right), \quad \text{wobei} \quad w = e^{-j2\pi/N_c}$$

die dem l-ten Ausbreitungsweg zugeordnet ist, wobei $\sigma_\eta^2$ eine Kanalrauschleistung bezeichnet,

wobei $E_{Tx}$ eine Übertragungsleistung bezeichnet, wobei p ein Skalar ist, wobei $\beta_{opt}^{-1}$ folgender Gewichtungsfaktor ist:

$$\beta_{opt}^{-1} = \sqrt{\frac{E_{Tx}}{tr\left(\left(\Phi^H\Phi + \frac{p\sigma_\eta^2}{E_{Tx}}\mathbf{1}\right)^{-2}\Phi^H\Psi\Psi^H\Phi\right)}}$$

wobei tr() einen Spuroperator bezeichnet, und

wobei das vorcodierte Signal durch einen Übertragungspunkt übertragen werden soll, wobei $N_g$ die Schutzintervalllänge ist, L eine Verzögerung bezeichnet, und

$$N = N_c + N_g$$

wobei $a_l^T$ einen transponierten Steuervektor bezeichnet, der einem Strahlformen in Richtung des l-ten Ausbreitungswegs zugeordnet ist, wobei $a_l^T$ 1 beträgt, wenn die Gewichtungsmatrix nur für ein zeitliches Streuen wirksam ist.

12. Vorrichtung gemäß einem der Ansprüche 1 bis 11, bei der die Einrichtung (111) zum Bereitstellen der Informationen über die erste Wegverzögerung und über die zweite Wegverzögerung zum Empfangen der Informationen über die erste Wegverzögerung und über die zweite Wegverzögerung von dem Mehrträgerempfänger wirksam ist, sowie um die Informationen an die Einrichtung (103) zum Gewichten zu liefern.

13. Vorrichtung gemäß einem der Ansprüche 1 bis 12, bei der die Einrichtung (111) zum Bereitstellen der Informationen ein Speicherelement zum Speichern einer Mehrzahl von Kanalverzögerungsprofilen aufweist, wobei jedes Kanalverzögerungsprofil einem bestimmten Übertragungsszenario zugeordnet ist, und
wobei die Einrichtung (111) zum Bereitstellen der Informationen zum Auswählen eines gegenwärtigen Kanalverzögerungsprofils, das einem gegenwärtigen Übertragungsszenario entspricht, wirksam ist, sowie zum Bereitstellen einer entsprechenden Information über die erste Wegverzögerung und über die zweite Wegverzögerung, wobei die entsprechende Information durch das gegenwärtige Kanalverzögerungsprofil beinhaltet ist, an die Einrichtung (103) zum Gewichten.

14. Vorrichtung gemäß einem der Ansprüche 1 bis 13, bei der die Einrichtung (111) zum Bereitstellen der Informationen zum Schätzen der ersten Wegverzögerung und der zweiten Wegverzögerung aus einer empfangenen Version eines Signals, das durch den Mehrträgerempfänger übertragen wird, wirksam ist.

15. Vorrichtung gemäß einem der Ansprüche 1 bis 14, bei der das Mehrträgersignal einen Satz von Mehrträgerwerten aufweist, wobei die Einrichtung (103) zum Gewichten zum Gewichten des Satzes von Mehrträgerwerten unter Verwendung eines Satzes von Gewichtungskoeffizienten wirksam ist, wobei die Vorrichtung zum Vorcodieren ferner eine Einrichtung zum Bestimmen der Gewichtungskoeffizienten aufweist.

16. Vorrichtung gemäß Anspruch 15, bei der die Einrichtung zum Bestimmen zum Empfangen der Informationen über die erste Wegverzögerung und über die zweite Wegverzögerung als die einzige Kanalinformation und zum Bestimmen der Gewichtungskoeffizienten durch ausdrückliches Berücksichtigen der Informationen über die erste Wegverzögerung und über die zweite Wegverzögerung wirksam ist.

17. Vorrichtung gemäß Anspruch 15 oder 16, bei der der Satz von Gewichtungskoeffizienten in einer Gewichtungsmatrix angeordnet ist, wobei die Einrichtung zum Bestimmen der Gewichtungskoeffizienten zum Lösen folgender Optimierungsfunktion:

$$[T, \beta] = \arg \min_{T, \beta} E\left[\left\|u[n] - \beta \hat{u}[n]\right\|_2^2\right]$$

in einem Sinn eines kleinsten mittleren quadratischen Fehlers wirksam ist,
wobei T die Gewichtungsmatrix bezeichnet, $\beta$ ein Gewichtungsfaktor ist, u(n) ein erwünschtes Signal ohne Intersymbolstörungen und ohne Interträgerstörungen bezeichnet, $\hat{u}(n)$ ein geschätztes Signal, das durch Intersymbolstörungen verfälscht ist, und ohne Interträgerstörungen bezeichnet, wobei das geschätzte Signal nur die Wegverzögerungen als den Kanaleinfluss widerspiegelt.

18. Mehrträgerübertragungsvorrichtung zum Bereitstellen eines vorcodierten Signals, das durch einen Mehrwegekommunikationskanal übertragen werden soll, die folgende Merkmale aufweist:

eine Einrichtung zum Bereitstellen eines Informationssignals, das eine Anzahl von Werten aufweist, wobei das Informationssignal Informationen aufweist, die durch den Mehrwegekommunikationskanal übertragen werden sollen;

einen Zuweiser zum Zuweisen der Anzahl von Werten zu diskreten Trägerfrequenzen, die einem Mehrträgermodulationsschema zugeordnet sind, um ein Mehrträgersignal bereitzustellen;

die Vorrichtung gemäß einem der Ansprüche 1 bis 17 zum Bereitstellen des vorcodierten Signals aus dem Mehrträgersignal.

19. Verfahren zum Vorcodieren eines Mehrträgersignals zur Bereitstellung eines vorcodierten Signals, wobei das Mehrträgersignal einen Satz von Werten aufweist, wobei jeder Wert des Satzes von Werten einer Trägerfrequenz einer Anzahl von Trägerfrequenzen eines Mehrträgermodulationsschemas zugeordnet ist, wobei das vorcodierte Signal an einen Mehrwegekommunikationskanal übertragen werden soll, der einen ersten Weg, der einer ersten Wegverzögerung zugeordnet ist, und einen zweiten Weg, der einer zweiten Wegverzögerung zugeordnet ist, aufweist, wobei die erste Wegverzögerung größer ist als eine Länge eines zu entfernenden vorbestimmten Schutzintervalls in einem Mehrträgerempfänger, wobei der Mehrwegekommunikationskanal Langzeitkanalzustandsinformationen und Kurzzeitkanalzustandsinformationen aufweist, wobei die Langzeitkanalzustandsinformationen Wegverzögerungen kennzeichnen, und wobei die Kurzzeitkanalzustandsinformationen sich auf Schwundkoeffizienten beziehen, wobei das Verfahren folgende Schritte aufweist:

Bereitstellen einer Information über die erste Wegverzögerung und über die zweite Wegverzögerung; und

Gewichten des Mehrträgersignals unter Verwendung eines Satzes von Gewichtungskoeffizienten, wobei die Gewichtungskoeffizienten auf den Langzeitkanalzustandsinformationen basieren und nicht auf den Kurzzeitkanalzustandsinformationen basieren, wobei das Mehrträgersignal derart gewichtet wird, dass ein zeitlich gestreutes Signal als das vorcodierte Signal erhalten wird, wobei eine Länge des zeitlich gestreuten vorcodierten Signals einer Summe einer Länge des Mehrträgersignals und der Länge des vorbestimmten Schutzintervalls entspricht.

20. Verfahren zum Bereitstellen eines vorcodierten Signals, das durch einen Mehrwegekommunikationskanal übertragen werden soll, das folgende Schritte aufweist:

Bereitstellen eines Informationssignals, das eine Anzahl von Werten aufweist, wobei das Informationssignal Informationen aufweist, die durch den Mehrwegekommunikationskanal übertragen werden sollen;

Zuweisen der Anzahl von Werten zu diskreten Trägerfrequenzen, die dem Mehrträgermodulationsschemas zugeordnet sind, um ein Mehrträgersignal bereitzustellen;

Durchführen des Verfahrens zum Vorcodieren des Mehrträgersignals gemäß Anspruch 19, um das vorcodierte Signal bereitzustellen.

21. Computerprogramm mit einem Programmcode, der zur Durchführung des Verfahrens gemäß Anspruch 19 oder 20 angepasst ist, wenn das Programm auf einem Computer läuft.

**Revendications**

1. Appareil pour le précodage d'un signal de porteuses multiples pour fournir un signal précodé, le signal de porteuses multiples comprenant un ensemble des valeurs de porteuses multiples, chaque valeur de l'ensemble de valeurs étant associée à une fréquence porteuse parmi un certain nombre de fréquences porteuses d'un schéma de modulation de porteuses multiples, où le signal précodé doit être transmis par un canal de communication à trajets multiples comprenant un premier trajet associé à un premier retard de trajet, et un deuxième trajet associé à un deuxième retard de trajet, où le premier retard de trajet est supérieur à une longueur d'un intervalle de sécurité prédéterminé à éliminer dans un récepteur de porteuses multiples, le canal de communication à trajets multiples comprenant des informations d'état de canal à long terme et des informations d'état de canal à court terme, où les informations d'état de canal à long terme caractérisent le retard de trajet et où les informations d'état de canal à court terme se réfèrent à des coefficients d'évanouissement, l'appareil comprenant:

un moyen (111) pour fournir des informations sur le premier retard de trajet et sur le deuxième retard de trajet;
un moyen (103) pour pondérer le signal de porteuses multiples à l'aide d'un ensemble de coefficients de pondération, les coefficients de pondération étant basés sur les informations d'état de canal à long terme et n'étant pas basés sur les informations de canal à court terme d'état, où le moyen (103) pour pondérer est opérationnel pour pondérer le signal de porteuses multiples de sorte qu'il soit obtenu comme signal précodé un signal étalé dans le temps, où une longueur du signal étalé dans le temps correspond à une somme d'une longueur du signal de porteuses multiples et de la longueur de l'intervalle de sécurité prédéterminé.

2. Appareil selon la revendication 1, dans lequel le canal de communication à trajets multiples présente une caractéristique de retard de trajets multiples comprenant le premier retard de trajet et le deuxième retard de trajet, où du fait de la caractéristique de retard de trajets multiples se produisent des interférences entre symboles, et dans lequel l'ensemble de coefficients de pondération est basé sur la caractéristique de retard de trajets multiples.

3. Appareil selon la revendication 1 ou 2, dans lequel l'ensemble de coefficients de pondération est basé sur le premier retard de trajet et le deuxième retard de trajet.

4. Appareil selon la revendication 1 à 3, dans lequel l'ensemble de coefficients de pondération est basé sur la longueur de l'intervalle de sécurité prédéterminé.

5. Appareil selon les revendications 1 à 4, dans lequel l'ensemble de coefficients de pondération est basé sur des coefficients de Fourier associés à une transformée de Fourier et/ou des coefficients de Fourier associés à une transformée de Fourier inverse.

6. Appareil selon la revendication 5, dans lequel l'ensemble de coefficients de pondération est disposé dans une matrice de pondération comprenant un enchaînement d'une première matrice et d'une deuxième matrice, où la première matrice comprend les retards de trajet ($\Gamma$) et où la deuxième matrice comprend les coefficients de Fourier ($F$) et/ou les coefficients de Fourier inverse ($F^H$), et dans lequel le moyen (103) pour pondérer est opérationnel pour multiplier l'ensemble de valeurs de porteuses multiples par la matrice de pondération.

7. Appareil selon la revendication 6, dans lequel la deuxième matrice comprend un enchaînement d'une matrice de transformée de Fourier inverse comprenant les coefficients associés à une transformée de Fourier inverse, et d'une matrice ($\Omega$) comprenant les coefficients dans la diagonale associée à une transformée de Fourier des retards de trajet.

8. Appareil selon la revendication 6 ou 7, dans lequel la première matrice comprend un enchaînement d'une première sous-matrice et d'une deuxième sous-matrice, où la première sous-matrice comprend les L retards de trajet ($\Gamma$) et où la deuxième sous-matrice comprend un inverse d'une multiplication de la première sous-matrice par la première sous-matrice sous une forme conjuguée et transposée.

9. Appareil selon les revendications 1 à 8, dans lequel le moyen (111) pour fournir les informations est, par ailleurs, opérationnel pour fournir des informations sur l'énergie de bruit de canal, et dans lequel l'ensemble de coefficients de pondération est basé sur l'énergie de bruit de canal.

10. Appareil selon les revendications 1 à 9, dans lequel une pluralité d'antennes sont utilisées pour la transmission, dans lequel le moyen (111) pour pondérer est, par ailleurs, opérationnel pour pondérer le signal de porteuses multiples de sorte que le signal étalé dans le temps soit, par ailleurs, étalé dans l'espace à l'aide de l'ensemble de coefficients de pondération qui est basé sur un ensemble de vecteurs de direction, dans lequel l'ensemble de vecteurs de direction comprend un premier vecteur de direction associé au premier trajet de propagation, et un deuxième vecteur de direction associé au deuxième trajet de propagation.

11. Appareil selon la revendication 1 à 10, dans lequel le canal de communication comprend L+1 trajets de propagation associés à L+1 retards de trajet plus courts ou plus grands que la longueur de l'intervalle de sécurité, et dans lequel un autre nombre de trajets de propagation est associé à des retards de trajet excédant la longueur de l'intervalle de sécurité, dans lequel le signal de porteuses multiples comprend un ensemble des valeurs de porteuses multiples associées à $N_c$ fréquences porteuses, dans lequel le moyen (103) pour pondérer comprend un ensemble de coefficients de pondération disposés dans une matrice de pondération, dans lequel le moyen pour pondérer est opérationnel pour multiplier l'ensemble de coefficients de porteuses multiples par la matrice de pondération, dans lequel la matrice de pondération est

$$T = \beta_{opt}^{-1}\left(\Phi^H\Phi + \frac{p\sigma_\eta^2}{E_{Tx}}1\right)^{-1}\Phi^H\Psi$$

où $\Phi$ désigne une matrice comprenant les retards de trajet,

$$\begin{bmatrix} G_R\left(\Gamma_N^0 \otimes a_0^T\right) \\ \vdots \\ G_R\left(\Gamma_N^L \otimes a_L^T\right) \\ J_{N_g+1}G_R\left(\Gamma_N^{N_c-1,T} \otimes a_{N_g+1}^T\right) \\ \vdots \\ J_L G_R\left(\Gamma_N^{N-L,T} \otimes a_L^T\right) \end{bmatrix} = \Phi$$

où $\Gamma$ désigne une matrice de décalage contenant le retard de trajet d'un 1-ième trajet de propagation, où $G_R$ est une matrice représentant une opération associée à l'élimination de l'intervalle de sécurité, où $\Psi$ désigne une matrice

$$\Psi = \begin{bmatrix} F^H\Omega^0 \\ \vdots \\ F^H\Omega^L \\ 0_{1x}N_c \\ \vdots \\ 0_{(L-N_g)x}N_c \end{bmatrix}$$

où $F^H$ désigne une matrice de transformée de Fourier inverse, où $\Omega^1$ désigne une matrice diagonale

$$\Omega^1 = diag(1 \quad w^1 \quad w^{21} \cdots w^{1(N_c-1)}) \quad \text{où} \quad w = e^{-j2\pi/N_c}$$

associée au 1-ième trajet de propagation, où $\sigma_\eta^2$ désigne une énergie de bruit de canal,

où $E_{Tx}$ désigne une énergie de transmission, où p est une grandeur scalaire, où $\beta_{opt}^{-1}$ est un facteur de pondération

$$\beta_{opt}^{-1} = \sqrt{\frac{E_{Tx}}{tr\left(\left(\Phi^H\Phi + \frac{p\sigma_\eta^2}{E_{Tx}}1\right)^{-2}\Phi^H\Psi\Psi^H\Phi\right)}}$$

où tr() désigne un opérateur de trace, et
dans lequel le signal précodé doit être transmis par un point de transmission, où $N_g$ est la longueur d'intervalle de sécurité, L désigne un retard et

$$N = N_c + N_g$$

où $a_1{}^T$ désigne un vecteur de direction transposé associé à la formation de faisceau vers le 1-ième trajet de propagation, où $a_1{}^T$ est 1 lorsque la matrice de pondération n'est opérationnelle que pour l'étalement dans le temps.

**12.** Appareil selon les revendications 1 à 11, dans lequel le moyen (111) pour fournir les informations sur le premier retard de trajet et sur le deuxième retard de trajet est opérationnel pour recevoir les informations sur le premier retard de trajet et sur le deuxième retard de trajet du récepteur de porteuses multiples et pour fournir les informations au moyen (103) pour pondérer.

**13.** Appareil selon les revendications 1 à 12, dans lequel le moyen (111) pour fournir les informations comprend un élément de mémorisation destiné à mémoriser une pluralité de profils de retard de canal, où chaque profil de retard de canal est associé à un certain scénario de transmission, et
dans lequel le moyen (111) pour fournir les informations est opérationnel pour sélectionner un profil de retard de canal actuel correspondant à un scénario de transmission actuel, et pour fournir des informations correspondantes sur le premier retard de trajet et sur le deuxième retard de trajet, les informations correspondantes étant comprises dans le profil de retard de canal actuel, au moyen (103) de pondération.

**14.** Appareil selon les revendications 1 à 13, dans lequel le moyen (111) pour fournir les informations est opérationnel pour estimer le premier retard de trajet et le deuxième retard de trajet d'une version reçue d'un signal transmis par le récepteur de porteuses multiples.

**15.** Appareil selon les revendications 1 à 14, dans lequel le signal de porteuses multiples comprend un ensemble de valeurs de porteuses multiples, dans lequel le moyen (103) pour pondérer est opérationnel pour pondérer l'ensemble de valeurs de porteuses multiples à l'aide d'un ensemble de coefficients de pondération, dans lequel l'appareil de précodage comprend, par ailleurs, un moyen pour déterminer les coefficients de pondération.

**16.** Appareil selon la revendication 15, dans lequel le moyen pour déterminer est opérationnel pour recevoir les informations sur le premier retard de trajet et sur le deuxième retard de trajet comme seules informations de canal, et pour déterminer les coefficients de pondération en tenant compte explicitement des informations sur le premier retard de trajet et sur le deuxième retard de trajet.

**17.** Appareil selon la revendication 15 ou 16, dans lequel l'ensemble de coefficients de pondération est disposé dans une matrice de pondération, dans lequel le moyen pour déterminer les coefficients de pondération est opérationnel pour résoudre la fonction d'optimisation

$$[T, \beta] = \arg \min_{T, \beta} E\left[\left\| u[n] - \beta \hat{u}[n] \right\|_2^2\right]$$

dans le sens d'une erreur au carré moyenne minimale, où T désigne la matrice de pondération, $\beta$ est un facteur de pondération, $u(n)$ désigne un signal désiré sans interférences entre symboles et sans interférences entre porteuses, $\hat{u}(n)$ désigne un signal estimé corrompu par des interférences entre symboles et sans interférences entre porteuses, où le signal estimé ne reflète que le retard de trajet comme influence de canal.

**18.** Emetteur à porteuses multiples pour fournir un signal précodé à transmettre par un canal de communication à trajets multiples, comprenant:

un moyen pour fournir un signal d'information comprenant un certain nombre de valeurs, le signal d'information comprenant des informations à transmettre par le canal de communication à trajets multiples;
un moyen d'attribution destiné à attribuer le nombre de valeurs aux fréquences porteuses discrètes associées à un schéma de modulation de porteuses multiples, pour fournir un signal de porteuses multiples;
l'appareil selon les revendications 1 à 17 pour fournir le signal précodé à partir du signal de porteuses multiples.

**19.** Procédé pour le précodage d'un signal de porteuses multiples pour fournir un signal précodé, le signal de porteuses multiples comprenant un ensemble des valeurs, chaque valeur de l'ensemble de valeurs étant associée à une fréquence porteuse parmi un certain nombre de fréquences porteuses d'un schéma de modulation de porteuses multiples, dans lequel le signal précodé doit être transmis à un canal de communication à trajets multiples comprenant un premier trajet associé à un premier retard de trajet, et un deuxième trajet associé à un deuxième retard de trajet, où le premier retard de trajet est supérieur à une longueur d'un intervalle de sécurité prédéterminé à éliminer dans un récepteur de porteuses multiples, le canal de communication à trajets multiples comprenant des informations d'état de canal à long terme et des informations d'état de canal à court terme, où les information d'état de canal à long terme caractérisent le retard de trajet et où les informations d'état de canal à court terme se réfèrent à des coefficients d'évanouissement, le procédé comprenant les étapes suivantes consistant à:

fournir des informations sur le premier retard de trajet et sur le deuxième retard de trajet; et

pondérer le signal de porteuses multiples à l'aide d'un ensemble de coefficients de pondération, les coefficients de pondération étant basés sur les informations d'état de canal à long terme et n'étant pas basés sur les informations d'état de canal à court terme, dans lequel le signal de porteuses multiples est pondéré de sorte que soit obtenu comme signal précodé le signal étalé dans le temps, dans lequel une longueur du signal précodé étalé dans le temps correspond à une somme d'une longueur du signal de porteuses multiples et de la longueur de l'intervalle de sécurité prédéterminé.

20. Procédé pour fournir un signal précodé à transmettre par un canal de communication à trajets multiples, comprenant les étapes suivantes consistant à:

fournir un signal d'information comprenant un certain nombre de valeurs, le signal d'information comprenant les informations à transmettre par le canal de communication à trajets multiples;

attribuer le nombre de valeurs aux fréquences porteuses discrètes associées au schéma de modulation de porteuses multiples pour fournir un signal de porteuses multiples;

réaliser le procédé pour le précodage du signal de porteuses multiples selon la revendication 19, pour fournir le signal précodé.

21. Programme d'ordinateur présentant un code de programme adapté pour réaliser le procédé selon la revendication 19 ou 20, lorsque le programme est exécuté sur un ordinateur.

**FIG 1**

Means for providing information on a first path delay and on a second path delay — 111

Multicarrier signal — 105

— 109

Means for weighthing — 103

(time-spreaded) precoded signal: — 107

Communication channel — 113

— 115

Multicarrier receiver — 117

Remove Guard Interval — 119

— 121

Multicarrier demodulator — 123

— 125

Received multicarrier signal

Guard interval

Length of the multicarrier signal

Length of the multicarrier signal + Length of the guard interval

EP 1 629 649 B1

# FIG 2

# FIG 3

# FIG 4

$$s[n] = \begin{bmatrix} s_1[n] \\ \vdots \\ s_{N_c}[n] \end{bmatrix} \qquad \begin{matrix} \lambda_1 \\ \downarrow \\ \otimes \\ \\ \lambda_{N_c} \\ \downarrow \\ \otimes \end{matrix} \qquad \begin{matrix} \bar{\eta}_1 \\ \downarrow \\ \oplus \\ \\ \bar{\eta}_{N_c} \\ \downarrow \\ \oplus \end{matrix} \qquad \begin{bmatrix} \hat{s}_1[n] \\ \vdots \\ \hat{s}_{N_c}[n] \end{bmatrix} = \hat{s}[n]$$

# FIG 5

spread in time
(CP extension)

spread in space

# FIG 6

SIMULATION PARAMETERS FOR THE BEAMFORMING SCHEME AT THE TRANSMITTER.

| | |
|---|---|
| Number of subcarriers | $N_c = 64$ |
| Guard interval | $N_g = 0$ |
| Modulation | QPSK |
| Frame size | $N_{fr} = 22$ symbols |
| Channel | quasi static, 4 paths, exponential decay |
| Channel coding | 1/2 convolutional, memory 4 |
| Number of antennas at Tx | $M = 4$ |

# FIG 7

$s[n]$                              $\hat{s}[n]$

$$\Lambda$$

short-term CSI

# FIG 8

long-term CSI | short-term CSI

FIG 9

# FIG 10

# FIG 11

# FIG 12

# FIG 13

# FIG 14

$s[n]$

$\downarrow F^{\mathrm{H}}$

$\downarrow G_{\mathrm{l}}$

copy in time direction

$\downarrow W$

symbol
to be
transmitted

space

$\mathcal{T}$

space

time

Beamforming

Transmit Wiener Filter

44

# FIG 15

PARAMETERS FOR THE COMPARISON OF OUR PROPOSED PRECODING SCHEME AND THE BEAMFORMING SCHEME AT THE TRANSMITTER.

| Number of subcarriers | $N_c = 64$ |
|---|---|
| Guard interval | $N_g = 0$ |
| Modulation | QPSK |
| Frame size | $N_{fr} = 22$ symbols |
| Channel | quasi static, 7 paths, exponential decay |
| Channel coding | 1/2 convolutional, memory 4 |
| Number of antennas at Tx | $M = 4$ |

FIG 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. A. C. BINGHAM.** Multicarrier for Data Transmission: An Idea Whose Time Has Come. *IEEE Communications Magazine,* May 1990, vol. 28 (5), 5-14
- **S. ABETA ; H. ATARASHI ; M. SAWAHASHI.** Forward link Capacity of Coherent DS-CDMA and MC-CDMA Broadband Packet Wireless Access in a Multi-cell Environment. *Proc. IEEE Vehicular Technology Conference (VTC'2000-Fall,* September 2000
- **H. SCHMIDT ; K. D. KAMMEYER.** Impulse truncation for wireless OFDM systems. *5th International OFDM-Workshop,* September 2000
- **N. AL-DHAHIR ; J. M. CIOFFI.** Optimum Finite-Length Equalization for Multicarrier Transceivers. *IEEE Transactions on Communications,* January 1996, vol. 44 (1), 55-64
- **S. TRAUTMANN ; T. KARP ; N. J. FLIEGE.** Frequency Domain Equalization of DMT/OFDM Systems with Insufficient Guard Interval. *Proc. IEEE Int. Conference on Communications (ICC 2002,* April 2000, vol. 3, 1646-1650

- **Y. SUN.** Bandwidth-Efficient Wireless OFDM. *IEEE Journal of Selected Areas in Communications,* November 2001, vol. 19 (11), 2267-2278
- **Z. WHANG ; G. B. GIANNAKIS.** Wireless Multicarrier Communications. *IEEE Signal Processing Magazine,* May 2000, vol. 17 (3), 29-48
- **M. BUDSABATHON ; Y. HARA ; S. HARA.** n a Pre-FFT OFDM Adaptive Antenna Array for Delayed Signal Suppression. *Proc. the 7-th International OFDM-Workshop,* September 2002
- **K. KUSUME.** Linear Space-Time Precoding for OFDM Systems based on Channel State Information. *Proceedings IEEE, International Symposium on Personal, Indoor, and Mobile Radio Communications (PIMRC 2003,* September 2003, vol. 1, 231-235
- **M. BUDSABATHON ; Y. HARA ; S. HARA.** On a Pre-FFT OFDM Adaptive Antenna Array for Delayed Signal Suppression. *Proc. the 7-th International OFDM-Workshop,* September 2002
- **SIMON HAYKIN.** Adaptive Filter Theory. Prentice Hall, 2002